(19) Europäisches Patentamt
European Patent Office
Office européen des brevets

(11) **EP 4 372 124 A1**

(12) **EUROPEAN PATENT APPLICATION**
published in accordance with Art. 153(4) EPC

(43) Date of publication:
**22.05.2024 Bulletin 2024/21**

(21) Application number: **22841904.0**

(22) Date of filing: **23.06.2022**

(51) International Patent Classification (IPC):
*C25B 3/25* (2021.01)  *B01J 23/46* (2006.01)
*B01J 31/06* (2006.01)  *C01B 32/05* (2017.01)
*C04B 35/52* (2006.01)  *C04B 38/00* (2006.01)
*C25B 3/03* (2021.01)  *C25B 9/00* (2021.01)
*C25B 9/23* (2021.01)  *C25B 11/032* (2021.01)
*H01M 8/0606* (2016.01)

(52) Cooperative Patent Classification (CPC):
**B01J 23/46; B01J 31/06; C01B 32/05; C04B 35/52;
C04B 38/00; C25B 3/03; C25B 3/25; C25B 9/00;
C25B 9/23; C25B 11/032; H01M 8/0606;**
Y02E 60/50

(86) International application number:
**PCT/JP2022/025196**

(87) International publication number:
**WO 2023/286560 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.07.2021  JP 2021115961**

(71) Applicant: **Asahi Kasei Kabushiki Kaisha
Tokyo 1000006 (JP)**

(72) Inventors:
• **KANADA Yuka
Tokyo 100-0006 (JP)**
• **YAMASHITA Junya
Tokyo 100-0006 (JP)**

(74) Representative: **Strehl Schübel-Hopf & Partner
Maximilianstrasse 54
80538 München (DE)**

(54) **CATHODE DIFFUSION LAYER FOR PRODUCTION OF ORGANIC HYDRIDE**

(57)   A cathode diffusion layer for organic hydride production of the present disclosure includes a carbon foam, the carbon foam being a porous body with continuous voids, and having linear portions and node portions joining the linear portions.

*FIG. 1*

EP 4 372 124 A1

**Description**

TECHNICAL FIELD

The present disclosure relates to the technique of electrochemical hydrogenation of organic compounds, specifically, a cathode diffusion layer and a method of producing an electrolytic cell for organic hydride production using the cathode diffusion layer.

BACKGROUND

Hydrogen is widely used in industry for petroleum refining, chemical synthesis materials, metal refining, stationary fuel cells, and other applications. In recent years, the potential for use in hydrogen stations for fuel cell vehicles (FCVs), smart communities, hydrogen power plants, etc. has also been expanding. Furthermore, as the use of renewable energy sources increases, the need to maintain a balance between supply and demand in the power grid has prompted the development of hydrogen carrier technology to efficiently store and transport large amounts of electricity.

Examples of hydrogen carriers include mainly liquefied hydrogen, ammonia, and hydrogenated organic compounds in which hydrogen is chemically bonded to organic compounds such as benzene, toluene, and naphthalene. Liquefied hydrogen has the advantage of high hydrogen compression density, but it requires low temperature and high pressure for storage and transportation, and its energy efficiency due to boil-off is a factor that increases costs. Ammonia can store hydrogen at a higher density than liquefied hydrogen, but a major challenge is to establish dehydrogenation technology and handling methods to remove to use the hydrogen. On the other hand, methylcyclohexane, one of hydrogenated organic compounds, in which hydrogen is bonded to toluene, has the advantage of storing hydrogen at a higher density than compressed hydrogen and using the same infrastructure technology as gasoline although it is inferior to liquid hydrogen and ammonia. Furthermore, dehydrogenation catalysts have also been developed, and methylcyclohexane is considered the most feasible hydrogen carrier.

Hydrogenated organic compounds as hydrogen carriers are produced by introducing hydrogen and the gas of the organic compound to be hydrogenated under high temperature and pressure conditions into a fixed-bed reactor in which granular catalysts are supported on a mesh-like bed. However, since hydrogenation of an organic compound to be hydrogenated such as benzene and toluene is an exothermic reaction, part of the energy of hydrogen is lost as heat. In addition, in order to extract hydrogen from hydrogenated organic compounds, energy must be provided again to compensate for this heat loss, resulting in higher energy costs for using hydrogen.

On the other hand, technologies have been developed to produce a hydrogenated organic compound directly without producing hydrogen by electrochemically reacting water with organic compounds to be hydrogenated. This method reduces heat loss due to hydrogenation reactions and also eliminates the need for a hydrogenation plant, thus enabling significant facility reductions. As a result, a reduction in the total cost of hydrogen use can be expected.

PTLs 1-5 report a method for producing hydrogenated organic compounds using electrochemical reduction apparatuses with a polymer electrolyte membrane (PEM)-type electrolytic synthesis cell that has a structure similar to that of a fuel cell. PTL 6 discloses a redox flow battery that uses carbon foams for the electrodes.

CITATION LIST

CITATION LIST

Patent Literature

PTL 1: JP 2003-45449 A
PTL 2: JP 2005-126288 A
PTL 3: JP 2013-111585 A
PTL 4: WO 2015/029367 A1
PTL 5: WO 2015/146944 A1
PTL 6: WO 2020/184455 A1

SUMMARY

(Technical Problem)

However, the above technologies have some issues to be improved in terms of electrolytic efficiency. In the electrolytic synthesis of organic hydrides, the anode chamber liquid, which is an aqueous solution, and the cathode chamber liquid, which is an organic compound, are separated by a PEM membrane. On the electrode surface of the cathode chamber, the supply of the raw material, i.e., an organic compound to be hydrogenated, and the discharge of the product, i.e., a hydrogenated organic compound, must be promptly and uniformly carried out. Failure to supply and discharge promptly leads to hydrogen generation through side reactions, which interferes with the desired toluene reduction and results in a decrease in current efficiency. In this regard, increasing the temperature of the organic hydride electrolytic synthesis cell decreases the viscosity of toluene, i.e., the organic compound to be hydrogenated, and improves the mass transfer of toluene, but increases the amount of water that permeates through the PEM membrane from the anode chamber to the cathode chamber and diffuses into the cathode chamber, thereby inhibiting the mass transfer of toluene. This reduces the current efficiency, which is the efficiency of the number of electrons contributed to the purification of the hydrogenated organic compound relative to the number of electrons energized in the electrolytic synthesis cell. This tendency is more pronounced at higher current densities. To further improve current efficiency, improvement of toluene mass transfer is highly desired.

PTL 6 discloses a redox flow battery that is charged and discharged by allowing an aqueous electrolyte solution to pass through carbon foam electrodes and transfer electrons to and from active materials at the electrode surfaces, but it fails to disclose mass transfer.

An object of the present disclosure is to provide a cathode diffusion layer for organic hydride production and an electrolytic cell for organic hydride production that exhibit good current efficiency even at high current density by improving mass transfer resistance on the cathode chamber side.

(Solution to Problem)

As a result of diligent studies on ways to solve the above-mentioned problem, the present inventors have discovered that using a carbon foam with a specific porous structure for the cathode diffusion layer can reduce mass transfer resistance and exhibit excellent current efficiency even at high current densities. This discovery has led to the completion of the present disclosure.

Specifically, the present disclosure is as follows:

[1] A cathode diffusion layer for organic hydride production comprising a carbon foam, the carbon foam being a porous body with continuous voids, and comprising linear portions and node portions joining the linear portions, wherein an average fiber diameter of the linear portions is 0.5 $\mu$m or more and 4.0 $\mu$m or less.

[2] The cathode diffusion layer for organic hydride production according to [1], wherein the carbon foam has a Taber bending stiffness measured according to JIS P8125 of 1.0 or more and 50.0 gf·cm or less.

[3] The cathode diffusion layer for organic hydride production according to [1] or [2], wherein the carbon foam has a density of the node portions of 20,000 /mm$^3$ or more in at least a portion thereof, and has a crystallite size of 1.50 nm or more based on diffraction of the (002) plane in a powder X-ray diffraction measurement.

[4] The cathode diffusion layer for organic hydride production according to any one of [1] to [3], wherein the carbon form has an average carbon frequency of 0.0004 to 0.0035 $\mu$m$^{-2}$.

[5] The cathode diffusion layer for organic hydride production according to any one of [1] to [4], wherein the carbon form has a standard deviation of the carbon frequency of 0.0005 or less.

[6] The cathode diffusion layer for organic hydride production according to any one of [1] to [5], wherein the carbon form has an average carbon area ratio of 0.010 to 0.300.

[7] The cathode diffusion layer for organic hydride production according to any one of [1] to [6], wherein the carbon form has a standard deviation of the carbon area ratio of 0.030 or less.

[8] An electrolytic cell for organic hydride production comprising:

a proton-conductive solid polymer electrolyte membrane;
an anode catalyst layer to oxidize water to generate protons, the anode catalyst layer being provided on one side of the solid polymer electrolyte membrane;
a cathode catalyst layer to reduce a substance to be hydrogenated; and
a cathode diffusion layer according to any one of [1] to [7], the cathode catalyst layer and the cathode diffusion layer being provided on the other side of the solid polymer electrolyte membrane.

[9] The electrolytic cell for organic hydride production according to [8], wherein the solid polymer electrolyte membrane is a perfluorocarbon polymer with ion exchange groups, an equivalent weight (EW) of the ion exchange groups is 600 g/eq or more and 2000 g/eq or less, and a dimensional change ratio in at least one of an X direction and a Y direction of the following dimensional change ratios caused by immersion in a 2M sulfuric acid aqueous solution is 80% or more and less than 100%, and an ion cluster diameter in a direction perpendicular to a membrane plane measured by small-angle X-ray scattering is 3.0 nm or more:
<dimensional change ratio caused by immersion in the 2M sulfuric acid aqueous solution>
a test electrolyte membrane with a water content of 1% or less is prepared, the test electrolyte membrane is immersed in a 2M sulfuric acid aqueous solution for 30 minutes at 25 °C, and the dimensional change ratio in the X-direction and the Y-direction perpendicular to the X-direction on a plane of the test electrolyte membrane is calculated using the following formula:

the dimensional change ratio (%) = (dimension in a specified direction after immersion) / (dimension in the specified direction before the immersion) $\times$ 100.

[10] The electrolytic cell for organic hydride production according to [8], wherein the solid polymer electrolyte membrane is a perfluorocarbon polymer with ion exchange groups, an equivalent weight (EW) of the ion exchange groups is 600 g/eq or more and 2000 g/eq or less, a dimensional change ratio in at least one of an X direction and a Y direction is 80% or more and less than 100% and a dimensional change ratio in a Z direction is 115% or more of the following dimensional change ratios caused by immersion in distilled water, and an ion cluster diameter in a direction perpendicular to a membrane plane measured by small-angle X-ray scattering is 3.0 nm or more: <dimensional change ratio caused by immersion in distilled water >
a test electrolyte membrane with a water content of 1% or less is prepared, the test electrolyte membrane is immersed in distilled water at 25 °C for 30 minutes, and the dimensional change ratios in the X direction and the Y direction perpendicular to the X direction on a plane of the test electrolyte membrane, and the Z direction perpendicular to the X direction and the Y direction is calculated:

the dimensional change ratio (%) = (dimension in a specified direction after immersion) / (dimension in the specified direction before the immersion) $\times$ 100.

[11] The electrolytic cell for organic hydride production according to any of [8] to [10], wherein the solid polymer electrolyte membrane has a peak intensity of a crystal long period measured by small-angle X-ray scattering of 0.5 or less.
[12] The electrolytic cell for organic hydride production according to any one of [8] to [11], wherein the solid polymer electrolyte membrane has a craze area ratio of 1.5% or less.
[13] An electrolytic cell for organic hydride production comprising:

a proton-conductive solid polymer electrolyte membrane;
an anode catalyst layer to oxidize water to generate protons, the anode catalyst layer being provided on one side of the solid polymer electrolyte membrane; and
a cathode catalyst layer to reduce a substance to be hydrogenated, the cathode catalyst layer being provided on the other side of the solid polymer electrolyte membrane,
wherein the solid polymer electrolyte membrane is a perfluorocarbon polymer with ion exchange groups, an equivalent weight (EW) of the ion exchange groups is 600 g/eq or more and 2000 g/eq or less, and a dimensional change ratio in at least one of an X direction and a Y direction of the following dimensional change ratios caused by immersion in a 2M sulfuric acid aqueous solution is 80% or more and less than 100%:
<dimensional change ratio caused by immersion in the 2M sulfuric acid aqueous solution>
a test electrolyte membrane with a water content of 1% or less is prepared, the test electrolyte membrane is immersed in a 2M sulfuric acid aqueous solution for 30 minutes at 25 °C, and the dimensional change ratio in the X-direction and the Y-direction perpendicular to the X-direction on a plane of the test electrolyte membrane is calculated using the following formula:

the dimensional change ratio (%) = (dimension in a specified direction after immersion) / (dimension in the specified direction before the immersion) $\times$ 100.

[14] An electrolytic cell for organic hydride production comprising:

a proton-conductive solid polymer electrolyte membrane;

an anode catalyst layer to oxidize water to generate protons, the anode catalyst layer being provided on one side of the solid polymer electrolyte membrane; and

a cathode catalyst layer to reduce a substance to be hydrogenated, the cathode catalyst layer being provided on the other side of the solid polymer electrolyte membrane,

wherein the solid polymer electrolyte membrane is a perfluorocarbon polymer with ion exchange groups, an equivalent weight (EW) of the ion exchange groups is 600 g/eq or more and 2000 g/eq or less, and a dimensional change ratio in at least one of an X direction and a Y direction is 80% or more and less than 100% and a dimensional change ratio in a Z direction is 115% or more of the following dimensional change ratios caused by immersion in distilled water:

<dimensional change ratio caused by immersion in distilled water >

a test electrolyte membrane with a water content of 1% or less is prepared, the test electrolyte membrane is immersed in distilled water at 25 °C for 30 minutes, and the dimensional change ratios in the X direction and the Y direction perpendicular to the X direction on a plane of the test electrolyte membrane, and the Z direction perpendicular to the X direction and the Y direction is calculated:

the dimensional change ratio (%) = (dimension in a specified direction after immersion) / (dimension in the specified direction before the immersion) $\times$ 100.

[15] The electrolytic cell for organic hydride production according to [13] or [14], wherein the solid polymer electrolyte membrane has a craze area ratio of 1.5% or less.

[16] The electrolytic cell for organic hydride production according to any one of [13] to [15], wherein the solid polymer electrolyte membrane has a YI value of 9.00 or less.

[17] The electrolytic cell for organic hydride production according to any of [13] to [16], wherein the solid polymer electrolyte membrane has a peak intensity of a crystal long period measured by small-angle X-ray scattering of 0.5 or less.

[18] The electrolytic cell for organic hydride production according to claim any one of [13] to [17], wherein solid polymer electrolyte membrane has an ion cluster diameter in a direction perpendicular to a membrane plane measured by small-angle X-ray scattering of 3.0 nm or more.

(Advantageous Effect)

According to the present disclosure, a cathode diffusion layer for organic hydride production and an electrolytic cell for organic hydride production that exhibit good current efficiency even at high current densities are provided.

BRIEF DESCRIPTION OF THE DRAWINGS

FIG. 1 is an SEM image of an example of a carbon foam with continuous voids;

FIG. 2 is a flowchart of the method of manufacturing a carbon foam according to the present embodiment;

FIG. 3 is a SEM image of the carbon foam used in Example 1;

FIG. 4 is an SEM image of the carbon foam used in Comparative Example 3.

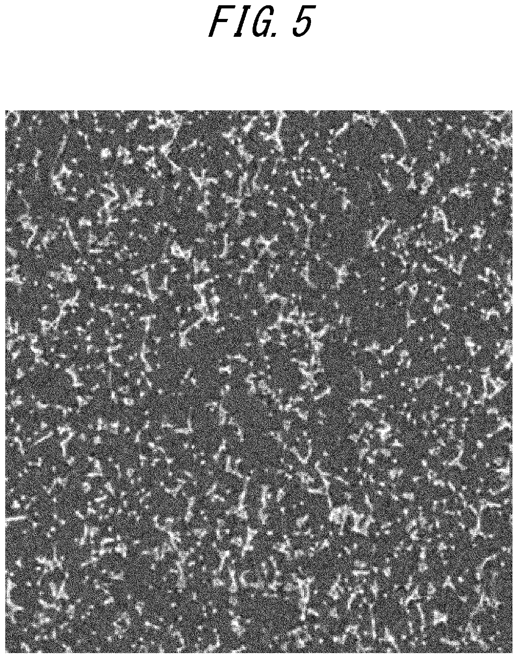

FIG. 5 is an analytical image of the calculated carbon frequency of the carbon foam used in Example 3;

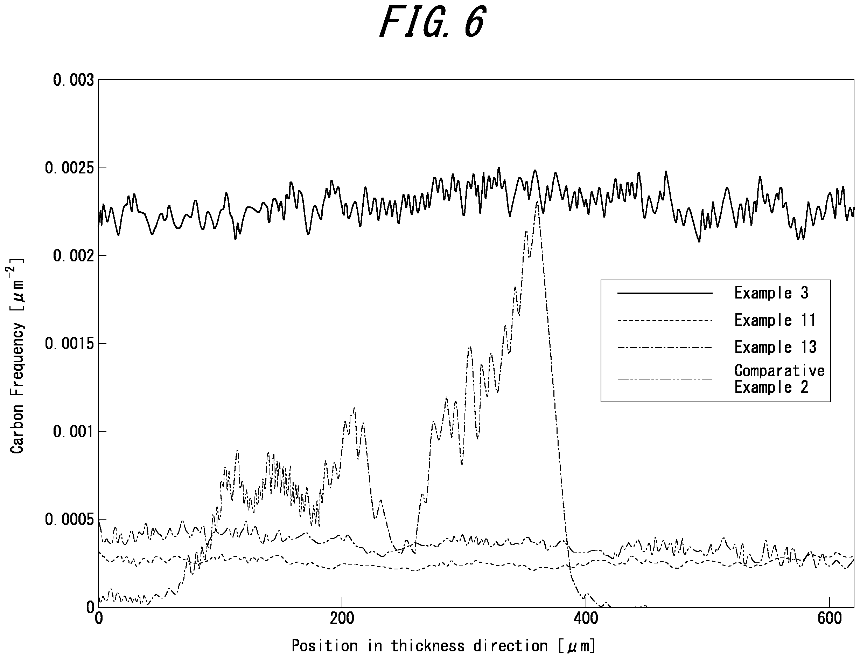

FIG. 6 is a graph indicating the carbon frequency per 1 $\mu$m$^2$ versus the thickness direction of the carbon foams used in Examples 3 and 11, the carbon fiber paper used in Example 13, and the carbon fiber nonwoven fabric used in Comparative Example 2; and

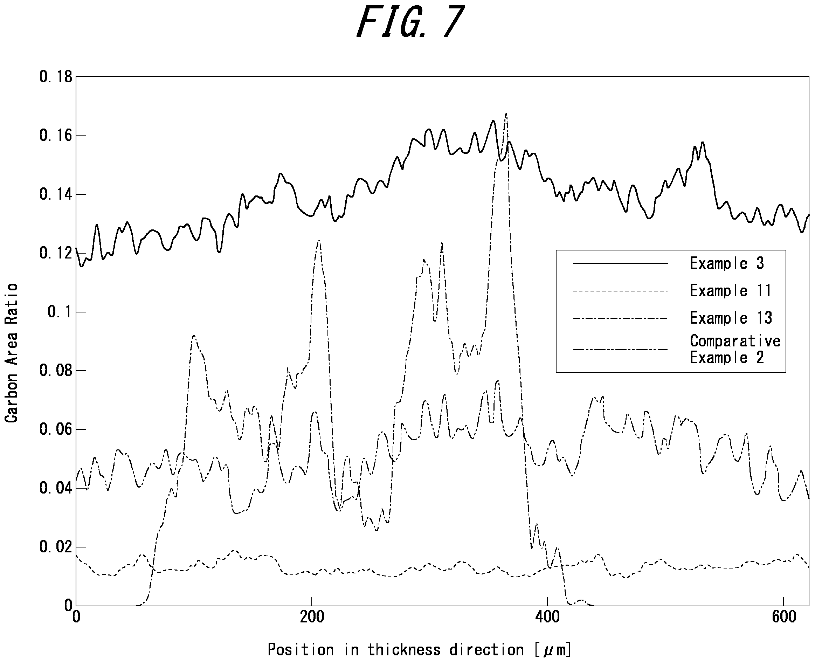

FIG. 7 is a graph indicating the carbon area ratio versus the thickness direction of the carbon foams used in Examples 3 and 11, the carbon fiber paper used in Example 13, and the carbon fiber nonwoven fabric used in Comparative

Example 2.

DETAILED DESCRIPTION

The following provides a detailed description of an embodiment of the present disclosure (hereinafter, referred to as the "present embodiment"). This disclosure is not limited to the following description, but may be practiced in a wide variety of variations within the scope of the gist thereof.

An organic hydride production apparatus of the present embodiment includes a proton-conductive polymer electrolyte membrane; an anode catalyst layer to oxidize water to generate protons, the anode catalyst layer being provided on one side of the solid polymer electrolyte membrane; and a cathode catalyst layer to reduce a substance to be hydrogenated, the cathode catalyst layer being provided on the other side of the solid polymer electrolyte membrane, so that an anode chamber for supplying water and a cathode chamber for supplying the substance to be hydrogenated are separated. A cathode diffusion layer is provided within the cathode chamber and is placed adjacent to the cathode catalyst. It serves to supply the substance to be hydrogenated and discharge the hydrogenated substance, and acts as a conductor for the electrons used in reduction.

The cathode diffusion layer of the present embodiment preferably has a structure wherein the conductor is continuous three-dimensionally from the viewpoint of efficiently for conducting electrons from the current collector to the catalyst layer.

In addition, from the viewpoint of rapid mass transfer of the substance to be hydrogenated and the hydrogenated substance, it is preferably a porous body with continuous voids. From these viewpoints, a carbon foam is suitably used.

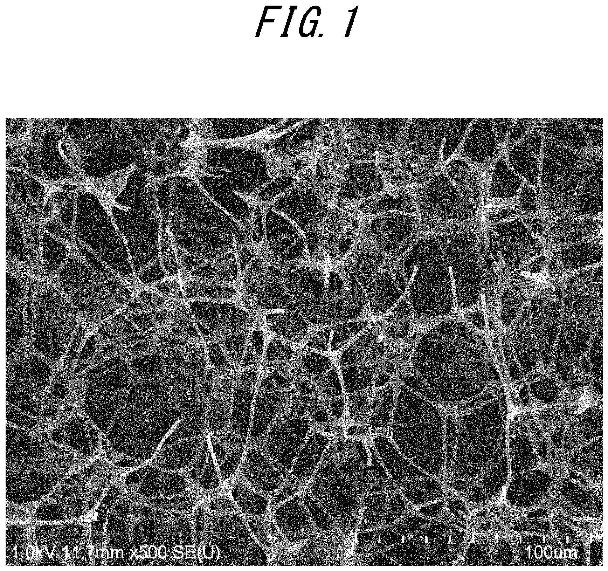

FIG. 1 is an SEM image of an example of a carbon foam with continuous voids.

The carbon foam of the present embodiment preferably has linear portions and node portions joining the linear portions. Multiple (two or more, three or more, four or more, etc.) linear portions may be joined in one node portion. In the present disclosure, the fiber diameter of the linear portions is the thickness of the linear portions connecting the node portions. Among portions having a linear shape, a region where the fiber diameter is within twice the minimum fiber diameter of the portion is referred to as a linear portion, and a region where the fiber diameter exceeds twice the minimum fiber diameter of the portion is referred to as a node portion.

(Average fiber diameter of linear portions)

The average fiber diameter of the linear portions in the carbon foam of the present embodiment is preferably 0.5 $\mu$m or more, more preferably 0.8 $\mu$m or more, and most preferably 1.2 $\mu$m or more from the viewpoint of good physical strength and electrical conductivity. In addition, from the viewpoint of maintaining good deformability and restorability during the compression behavior of the carbon foam, the average fiber diameter of the linear portions is preferably 4.0 $\mu$m or less, more preferably 3.5 $\mu$m or less, and most preferably 3.0 $\mu$m or less.

(Density of node portion)

From the viewpoint of the resilience when applied with a compressive load, the density of the node portions of the carbon foam of the present embodiment is preferably 20,000 /mm$^3$ or more, more preferably 80,000 /mm$^3$ or more, and even more preferably 500,000 /mm$^3$ or more. In addition, from the viewpoint of the flexibility of the carbon foam, the density of the node portions of the carbon foam is preferably 5,000,000 /mm$^3$ or less, more preferably 4,000,000 /mm$^3$ or less, and even more preferably 3,000,000 /mm$^3$ or less.

It is preferable that at least a part of the carbon foam of the present embodiment have a location satisfying the above density of the node portions ranges. It is more preferable that 50 volume% of the carbon foam satisfy the above density ranges, even more preferable that 75 volume% of the carbon foam satisfy the above density ranges, and particularly preferable that any location in the carbon foam satisfy the above density ranges.

(Surface functional group concentration)

In the carbon foam of the present embodiment, the ratio of graphite among the carbon atoms measured by X-wave photoelectron spectroscopy is preferably 70 at% or more. When this ratio is 70 at% or more, the resistance can be maintained stably low for long-term charge-discharge in a configuration in which a carbon foam is used as the cathode diffusion layer. Furthermore, alternatively or additionally, in the carbon form in the present embodiment, the sum of the ratios of carbon atoms having hydroxy groups, carbon atoms forming carbonyl groups, and carbon atoms forming carboxy groups measured by X-wave photoelectron spectroscopy is preferably 40 at% or less, more preferably 20 at% or less, and preferably 10 at% or less from the viewpoint of good affinity with the substance to be hydrogenated and from the viewpoint of good water discharge through the solid polymer electrolyte membrane.

(Carbon content)

From the viewpoint of conductivity, the carbon content of the carbon foam of the present embodiment is preferably 51 mass% or more, preferably 60 mass% or more, preferably 70 mass% or more, preferably 80 mass% or more, preferably 85 mass% or more, more preferably 90 mass % or more, and further preferably 98 mass % or more. The upper limit of the carbon content is not specifically limited, but it may be 100 mass wt% or less, or it may be 99 mass wt% or less.

Note that the carbon content of the carbon foam can be determined by X-ray fluorescence measurement, and specifically the carbon content is measured with the method described in the EXAMPLES section.

(Ratio of the number of linear portions to number of node portions)

In the carbon foam of the present embodiment, the ratio of the number of linear portions to the number of node portions may be 1.4 or more and 1.55 or less. The ratio is, in other words, the average number of branches branching at a node portion. When the ratio is 1.4 or more, structures that do not have a three-dimensional network structure where linear portions are joined by node portions but have unjoined linear portions in contact with one another as in nonwoven fabric can be excluded from the carbon foam of the present embodiment. When the ratio is less than 1.55, porous structures covered with, for example, a honeycomb-like wall surface where the linear portions are in a belt shape can be excluded from the carbon foam of the present embodiment. The ratio is preferably 1.42 or more and 1.53 or less, and more preferably 1.44 or more and 1.50 or less.

(Orientation angle of linear portion)

For example, when a melamine resin foam is heat treated and carbonized in a heat treatment furnace, the obtained carbon foam has an isotropic structure in which carbon fibers constituting the skeleton of the carbon foam are evenly spread in all directions. For such a carbon foam, the average value of the orientation angle of the linear portions with respect to each of the three mutually perpendicular directions satisfies a condition where the difference $\theta$ between the average value of the orientation angle with respect to one direction and the average values of the orientation angle with respect to the other directions is 1 ° or less.

However, when the melamine resin foam is heat treated and carbonized, applying a compressive stress to the resin foam, which is a raw material of the carbon foam, will lead to a carbon foam having a skeleton structure in which carbon fibers spread anisotropically. This carbon foam is capable of suppressing breakage of carbon fibers (linear portions), reducing pulverization, and realizing high resilience even when a compressive load is applied thereon. To achieve this effect, the difference in the average value of the orientation angle may be 3 ° or more in the carbon foam in the present embodiment. The difference is preferably 5 ° or more and more preferably 8 ° or more. The above three directions may be, for example, the x, y, and z directions, and may be set arbitrarily for the carbon form.

(Porosity)

From the viewpoint of flexibility, the porosity of the carbon foam of the present embodiment may be 50 % or more, and is preferably 60 % or more, and more preferably 70 % or more. The porosity of the carbon foam of the present embodiment may be 99% or less, and is preferably 98% or less, and more preferably 95% or less from the viewpoint of improved surface area and reduced cell resistance.

In the present embodiment, the porosity is a value obtained from the bulk density and the real density. The bulk density is a density based on the volume including the pores in the carbon foam. On the other hand, the real density is a density based on the volume occupied by the material of the carbon foam.

(Taber bending stiffness)

From the viewpoint of good handleability, the carbon foam of the present embodiment has a Taber bending stiffness measured in accordance with JIS P8125 of preferably 1.0 gf·cm or more, more preferably 5.0 gf·cm or more, and even more preferably 10.0 gf·cm. On the other hand, from the viewpoint of high flexibility and good followability inside the cell, 50.0 gf·cm or less is preferred, 45.0 gf·cm or less is more preferred, and 40.0 gf·cm or less is most preferred. The Taber bending stiffness of the carbon foam can be increased by, for example, compressing the carbon foam in the process of forming it and adjusting the density thereof to a higher value, or by coating a surface of the carbon foam with a carbon material such as carbon black, for example.

(Crystallite size)

The crystallite size Lc of the carbon foam of the present embodiment is preferably 1.50 nm or more, and more preferably 1.80 nm or more from the viewpoint of conductivity. In addition, from the viewpoint of physical fragility, it is preferably 4.00 nm or less and more preferably 3.00 nm or less.

(Average carbon frequency)

The carbon foam of the present embodiment has an average carbon frequency of preferably 0.0004 or more, more preferably 0.0005 or more, and more preferably 0.0010 or more from the viewpoint of ensuring good contact with a cathode catalyst layer and a current collector plate (cathode plate) and reducing resistance. In addition, from the viewpoint of maintaining strength and flexibility within the cathode diffusion layer for better handling, the average carbon frequency is preferably 0.0035 or less, more preferably 0.0030 or less, and even more preferably 0.0028 or less.

(Average carbon area ratio)

The carbon foam of the present embodiment has an average carbon area ratio of preferably 0.010 or more, more preferably 0.020 or more, and even more preferably 0.10 or more, from the viewpoint of good electrical conductivity of the cathode diffusion layer. In addition, from the viewpoint of ensuring liquid permeability in the cathode diffusion layer and reducing resistance in mass transfer, the average carbon area ratio is preferably 0.300 or less, more preferably 0.250 or less, and even more preferably 0.200 or less.

(Standard deviation of carbon frequency)

The carbon foam of the present embodiment has a standard deviation of the carbon frequency of preferably 0.0005 or less, more preferably 0.0004 or less, and even more preferably 0.0002 or less from the viewpoint of uniform liquid flowability in the cathode diffusion layer, efficient hydrogen addition reaction, and good current efficiency. The lower limit of the standard deviation of the carbon frequency is not particularly limited.

(Standard deviation of carbon area ratio)

The carbon foam of the present embodiment has a standard deviation of the carbon area ratio of preferably 0.030 or less, more preferably 0.025 or less, and even more preferably 0.020 or less from the viewpoint of uniform liquid flowability in the cathode diffusion layer, efficient hydrogen addition reaction, and good current efficiency. The lower limit of the standard deviation of the carbon area ratio is not particularly limited.

(Measurement method of crystallite size)

The crystallite size Lc of the carbon foam is evaluated by the diffraction of the (002) plane. The sample is ground in a mortar. Subsequently, the ground sample is subjected to wide-angle X-ray measurement using a desktop X-ray diffractometer D2 PHASER (manufactured by Bruker Corporation). The specific measurement conditions are as follows.

-Measuring conditions-

Radiation source: Cu Kα
Tube current: 30 mA
Tube voltage: 40 kV
Slit: 1 mm
Sample rotational speed: 10 rotations/minute
Measurement time of one step: 0.3 seconds
Start angle ($2\theta$): 5.00 °
Measurement step ($2\theta$): 0.01 °
End angle ($2\theta$): 90.00 °

After the measurement, the obtained data is analyzed to calculate the crystallite size Lc. The crystallite size Lc can be determined by substituting the half-value width $\beta$ of the diffraction peak of the (002) plane appearing near $2\theta$ =

25 degrees and the angle θ of the peak maximum value into the following equation (c) (Scherrer equation). In general, a higher carbonization temperature leads to higher crystallinity and a larger Lc value.

$$Lc = (K\lambda) / \beta cos\theta \qquad\qquad ... (c)$$

where K is the form factor, and λ is the wavelength of the radiation source. Because the form factor is (002) plane diffraction, 0.90 is substituted. Because CuKα is used as the radiation source in this case, 1.541 is substituted for calculation.

(Measurement method of surface area)

In the present specification, the diameter of the carbon fibers forming the carbon foam is determined by image analysis of a scanning electron microscope (SEM) image. Specifically, the carbon foam is observed at a magnification of 10,000 using a scanning electron microscope. Assuming that the cross section is in a circular shape, the thickness of a carbon fiber is considered to be the fiber diameter. Note that the average fiber diameter is the mean value of fiber diameters measured as described above at arbitrary 20 locations.

(Measurement method of density of node portions, numbers of node portions and linear portions, and orientation angle)

In the present specification, the density of node portions, the respective number of the node portions and the linear portions, and the orientation angle are obtained by imaging the carbon foam using an X-ray computerized tomography (CT) apparatus, subjecting the obtained tomogram data to three-dimensional median filter treatment using a filter size of a radius of 2 pixels as preprocessing, then using OTSU's binarization algorithm (see Nobuyuki OTSU, "Automatic Threshold Selection Method based on Discrimination and Least Squares Criterion", The IEICE Transactions D, Vol. J63-D, No. 4, pp. 346-356 (1980)) to divide the region into structure and space to obtain a three-dimensional image of the structure including the inside of the carbon foam, and using the obtained three-dimensional image and structural analysis software to determine the values.

Specifically, the respective numbers of the node portions and the linear portions are determined by detecting the node portions and the linear portions included in the three-dimensional image obtained as described above, and counting the numbers thereof. The density of the node portions is determined by counting the number of node portions per unit volume of 1 mm × 1 mm × 1 mm. The ratio of the number of linear portions to the number of node portions is determined based on the respective numbers of node portioned and linear portions counted as described above for the same carbon form.

The orientation angle θ of a linear portion is an angle between a straight line connecting the node portions at two ends of the linear portion and each direction, and is determined for each of the three mutually perpendicular directions in the three-dimensional image. The average value of orientation angle of the linear portions is determined for each direction.

A CT apparatus with low-energy and high-brightness X-rays such as a high-resolution 3D X-ray microscope nano3DX manufactured by Rigaku Corporation may be used as the CT apparatus for carbon foam structural analysis. For the image processing and structural analysis, Centerline Editor of Simpleware software manufactured by JSOL Corporation, for example, may be used.

(Measurement methods of average carbon frequency and average carbon area ratio)

In this specification, the average carbon frequency and average carbon area ratio of the carbon form are measured as follows. Using the three-dimensional median filter, the three-dimensional image captured in obtained using the above X-ray CT system is processed in neighboring 1 pixel using a filter size of a radius of 2 pixels, and is binarized using Otsu's algorithm. Furthermore, within an analysis region (624 μm × 624 μm) in a cross-sectional image of the carbon foam in the thickness direction (an image of a cross-sectional image of the cross-section cut perpendicularly to the thickness direction of the carbon foam), the number of continuous carbon portions and the sum of the areas of continuous carbon portions within the analysis region are determined using the particle analysis function of the image processing software ImageJ. The carbon frequency per 1 μm × 1 μm and carbon area ratio can be calculated by dividing these by the area of the analysis region, as expressed by the expression below. The same operation is repeated for 1152 cross-sectional images of the carbon foam in the thickness direction (obtained at 0.54 μm/pitch), and the average values of the measurements obtained for all regions are calculated to obtain the average carbon frequency and average carbon area ratio.

Note that calculation can be performed under analysis conditions that include the area at the edge of the image.

Furthermore, the average is calculated using cross-sectional images with a carbon area ratio of 0.01 or greater in the analysis region in order to exclude areas where no carbon was present as a sample.

Carbon frequency ($\mu$m$^{-2}$) = number of continuous carbon portions / area of analysis region Carbon area ratio = total area of continuous carbon portions / area of analysis region

[Image processing conditions]

    Number of pixels: 1152 $\times$ 1202 pixels
    Pixel size: 0.54 $\mu$m/pixel
    Thickness direction: 1152 images (0.54 $\mu$m/pitch)
    Software used: ImageJ 1.50i

(Measurement method of standard deviation of carbon frequency)

For the average carbon frequency of the carbon form described above, the standard deviation of the carbon frequency obtained for each cross-sectional image in the thickness direction can be determined. In this calculation, a cross-sectional image with a carbon area ratio of 0.01 or more in the analysis region is used in order to exclude regions where no carbon is present as a sample.

(Measurement method of standard deviation of carbon area ratio)

For the carbon area ratio of the carbon foam described above, the standard deviation of the carbon area ratio obtained for each cross-sectional image in the thickness direction can be determined. In this calculation, a cross-sectional image with a carbon area ratio of 0.01 or more in the analysis region is used in order to exclude regions where no carbon is present as a sample.

(Measurement method of surface area)

In this specification, the surface area of the carbon foam is determined by measuring the dimensions of the surface using, for example, a caliper, and the surface area is determined from the dimensions obtained.

(Measurement method of functional group concentration)

In this specification, a surface analysis of the carbon foam by X-ray photoelectron spectroscopy is performed as follows The concentration of oxygen-containing functional groups on the carbon foam surface can be measured using an X-ray photoelectron spectrometer (Perkin Elmer, ESCA-5500MT). The obtained C1s peak is fitted by four Gaussian distributions with peaks at binding energies of 284.4 eV (graphite), 285.6 eV (C-OH), 287.0 eV (C=O), and 288.6 eV (COOH), and the concentration of each surface functional group can be obtained by calculating the ratio of the area of each peak to the total area of the four peaks. In addition, the total surface functional group concentration can be determined from the ratio of the sum of the three peak areas at binding energies of 285.6 eV (C-OH), 287.0 eV (C=O), and 288.6 eV (COOH) to the total of the four peak areas.

(Calculation of porosity)

In the present specification, the porosity Vf,pore can be determined from the bulk density $\rho$bulk and the real density $\rho$real determined as described later using the following expression (X).

$$\text{Vf,pore} = ((1 / \rho bulk) - (1 / \rho real)) / (1 / \rho bulk) \times 100\ (\%)$$
$$\dots (X)$$

(Measurement of bulk density)

First, the dimensions of the carbon foam are measured using a caliper or the like, and the obtained dimensions are used to determine the bulk volume Vbulk of the carbon foam. Next, the mass M of the carbon foam is measured using a precision balance. From the obtained mass M and bulk volume Vbulk, the bulk density ρbulk of the carbon foam can be determined using the following equation (Y).

$$\rho bulk = M \, / \, Vbulk \qquad\qquad ... \; (Y)$$

(Measurement of real density)

The real density ρreal of the carbon foam can be determined with the sink-float method using a mixed solution of n-heptane, carbon tetrachloride, and ethylene dibromide. Specifically, carbon foam of an appropriate size is placed into a stoppered test tube first. Next, three solvents are appropriately mixed and added to the test tube, and the test tube is immersed in a thermostat bath at 30 °C. If the specimen comes up, then the low-density n-heptane is added. On the other hand, if the specimen sinks down, then the high-density ethylene dibromide is added. This operation is repeated until the specimen floats in the liquid. Finally, the density of the liquid is measured using a Gay-Lussac pycnometer.

(Method of manufacturing carbon foam)

A method of manufacturing a carbon foam of the present disclosure may include a raw material foam introduction process where a resin foam, which is a raw material of carbon foam, is introduced into a heat treatment furnace; a heating process where a temperature inside the heat treatment furnace is raised to a heat treatment temperature at a first heating rate; a carbonization process where the resin foam is kept at the heat treatment temperature for a predetermined time and carbonized to obtain a carbon foam; a cooling process where the temperature inside the heat treatment furnace is lowered to room temperature; and a carbon foam removing process where the carbon foam is removed from the heat treatment furnace. Here, the heating process may be performed while decompressing and evacuating the inside of the heat treatment furnace at least in a first temperature range where the amount of decomposition gas generated from the resin foam is large.

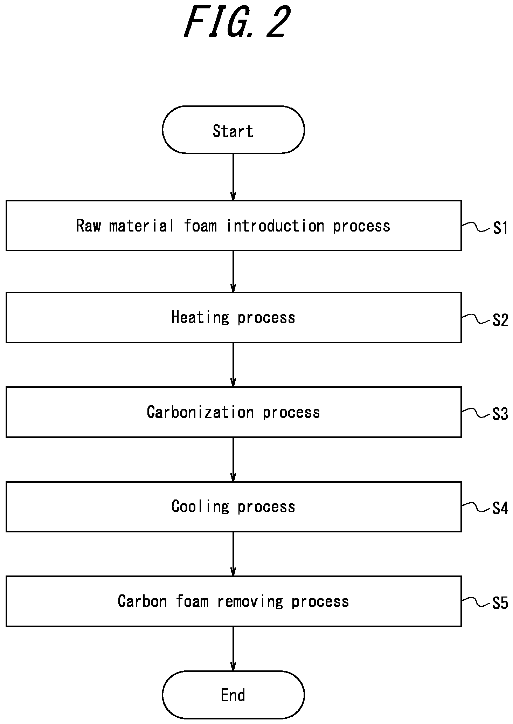

FIG. 2 illustrates a flow chart of the method of manufacturing a carbon foam according to the present embodiment.
First, in step S1, a resin foam, which is a raw material of the carbon foam, is introduced into a heat treatment furnace.

(Raw material form introduction process)

The resin foam as a raw material of the carbon foam may be any resin foam known as a raw material of the carbon foam. For example, in the case where the resin foam as a raw material is a melamine resin foam, a melamine/formaldehyde condensation foam manufactured with the method described in JP H04-349178 A may be used as the melamine resin foam, for example. The resin foam is not limited to a melamine resin foam, but may also be a urethane resin foam and a phenolic resin foam.
According to the above method, an aqueous solution or dispersion containing a melamine/formaldehyde precondensate, an emulsifier, a volatile foaming agent, a curing agent, and, if necessary, a well-known filler is first subjected to foaming treatment and then curing treatment to obtain a melamine/formaldehyde condensation foam.
In this method, the melamine/formaldehyde precondensate may be one having a ratio of melamine: formaldehyde = 1:1.5 to 1:4, and an average molecular weight of 200 to 1000, for example. In addition, examples of the emulsifier include sodium salts of alkyl sulfonic acids or aryl sulfonic acids in 0.5 to 5 mass% (based on the melamine/formaldehyde precondensate, the same applies to the following description). Furthermore, examples of the volatile foaming agent include pentane or hexane in 1 to 50 mass%. In addition, examples of the curing agent include hydrochloric acid or sulfuric acid in 0.01 to 20 mass%. In the foaming treatment and the curing treatment, the solution composed of the above components may be heated to a temperature set in accordance with the type of the used volatile foaming agent and the like.
In addition, the heat treatment furnace for carbonizing the resin foam as a raw material is not limited as long as it is a furnace capable of carbonizing the resin foam to obtain a carbon foam. Examples thereof include a heat treatment furnace including a reaction furnace for holding a resin foam as a raw material, a heater for heating the inside of the reaction furnace, a gas introduction port for introducing inert gas into the reaction furnace, a gas discharge port for discharging gas from the reaction furnace, and a vacuum pump for decompressing the inside of the reaction furnace and making it into a vacuum.
Next, in step S2, the temperature inside the heat treatment furnace is raised to a predetermined heat treatment temperature at a first heating rate (heating process). At this time, it is important to perform the process while decompressing and evacuating the inside of the heat treatment furnace in a first temperature range where the amount of decomposition gas generated from the resin foam is large.

As described above, when the resin foam as a raw material of the carbon foam is heated, the active decomposition gas generated from the resin foam reacts with the carbon fibers constituting a carbon foam and locally decomposes, and heterogeneity occurs in the carbon foam. The generation amount of the decomposition gas depends on the temperature inside the furnace. Therefore, in the present embodiment, the inside of the heat treatment furnace is decompressed and evacuated in a temperature range where the amount of decomposition gas generated from the resin foam is large (first temperature range) in the heating process. This facilitates the diffusion of decomposition gas generated inside the resin foam to the outside of the resin foam, thereby preventing the occurrence of heterogeneity in the carbon foam.

In the present embodiment, the temperature range where the amount of decomposition gas generated from the resin foam is large (first temperature range) is defined by monitoring the weight of the raw material resin foam in the heating process is monitored from 0 °C at intervals of 100 °C in advance, and identifying the temperature range where the weight of the resin foam decreases by 5% or more of its initial weight per 100 °C. For example, in the case where the weight of the resin foam decreases by 5 % or more of the initial weight per 100 °C in all temperature ranges of 300 °C or higher and lower than 400 °C, 400 °C or higher and lower than 500 °C, and 500 °C or higher and lower than 600 °C, the first temperature range is 300 °C or higher and lower than 600 °C.

As a result of our investigation, it was understood that, in the case of using a melamine resin foam as the resin foam, the temperature range with a large amount of decomposition gas (first temperature range) is a temperature range of 200 °C or higher and lower than 800 °C. Therefore, in the case of using a melamine resin foam as the resin foam, for example, the heat treatment furnace is decompressed and evacuated at least in the first temperature range.

The decompression and evacuation can be performed by an evacuation means such as a vacuum pump. However, the pump having at least an evacuation ability capable of reducing the pressure inside the furnace to 1 Pa or less within 10 minutes is used.

In the case where the resin foam as a raw material is a melamine resin foam, for example, the heating rate up to the heat treatment temperature (first heating rate) is preferably 10 °C/min or lower from the viewpoint of suppressing the generation amount of decomposition gas. In addition, the first heating rate is preferably 1 °C/min or higher from the viewpoint of overall productivity.

It is preferable to perform the heating process at a heating rate (second heating rate) lower than the heating rate up to the heat treatment temperature (first heating rate) in the temperature range where a large amount of decomposition gas is generated from the resin foam (first temperature range). In this way, it is possible to reduce the amount of decomposition gas generated inside the resin foam per unit time, and to further promote the diffusion of the decomposition gas to the outside of the foam structure. In the case where the heating rate is lowered (that is, the heating rate is changed to the second heating rate) in the first temperature range, the heating rate may be returned to the first heating rate for heating after the temperature inside the furnace exceeds the upper limit of the first temperature range.

Furthermore, it is preferable to perform the heating process at a heating rate (third heating rate) even lower than the second heating rate in the range where the increasing rate of the generation amount of decomposition gas is high (second temperature range) within the first temperature range where a large amount of decomposition gas is generated. In this way, it is possible to further reduce the amount of decomposition gas generated inside the resin foam per unit time, and to further promote the diffusion of the decomposition gas to the outside of the foam structure.

In the present embodiment, the temperature range where the increasing rate of the amount of decomposition gas generated from the resin foam is high (second temperature range) may be defined by monitoring the weight of the raw material resin foam in the heating process from 0 °C at intervals of 100 °C in advance, and identifying the temperature range where the weight of the resin foam decreases by 20% or more of its initial weight per 100 °C. For example, in the case where the weight of the resin foam decreases by 20 % or more of the initial weight per 100 °C in both temperature ranges of 300 °C or higher and lower than 400 °C and 400 °C or higher and lower than 500 °C, the second temperature range is 300 °C or higher and lower than 500 °C.

In the case of where the resin foam as a raw material is a melamine resin foam, the temperature range where the amount of desorbed gas generated from the resin foam is large (first temperature range) is a temperature range of 200 °C or higher and lower than 800 °C as described above. In addition, as a result of our investigation, it was understood that the temperature range where the increasing rate of the amount of desorbed gas generated from the resin foam is high (second temperature range) is a temperature range of 300 °C or higher and lower than 400 °C. When the resin foam as a raw material is a melamine resin foam, the heating rate is more preferably 5 °C/min or lower in the first temperature range, and particularly preferably 3 °C/min or lower in the second temperature range.

Moreover, in this heating process and the carbonization process described later, the atmosphere inside the furnace is made into an inert gas atmosphere or a vacuum to prevent the decomposition reaction between oxygen and the carbon fibers constituting a carbon foam. The furnace being a vacuum herein indicates that the degree of vacuum inside the furnace is less than 1 Pa. In the case of inert gas atmosphere, the inside of the furnace is decompressed and evacuated to release air containing oxygen after introducing the resin foam, which is a raw material of the carbon foam, into the heat treatment furnace (raw material foam introduction process), and when the inside of the furnace reaches a degree of vacuum of less than 1 Pa and is sufficiently evacuated, nitrogen gas is introduced. In this way, the inside of the furnace can be made into a nitrogen gas atmosphere. When the inside of the furnace is made into an inert gas atmosphere or a vacuum, the heating is started, and the inside of the furnace is decompressed and evacuated in the first temperature range.

Furthermore, in the range of 200 °C or higher and lower than 800 °C where the amount of desorbed gas of the melamine resin foam is large (first temperature range), it is preferable to continue the decompression and evacuation while introducing inert gas into the furnace. The inert gas, such as nitrogen gas or argon gas, flows inside the furnace, thereby promoting the discharge of the decomposition gas generated inside the resin foam.

During the introduction of the inert gas, the flow rate of the inert gas is preferably 1 L/min or more, more preferably 3 L/min or more, and particularly preferably 5 L/min or more. In addition, the flow rate of the inert gas is preferably 40 L/min or less, more preferably 30 L/min or less, and particularly preferably 20 L/min or less.

Subsequently, in step S3, the resin foam is kept at the heat treatment temperature, which has been reached by raising the temperature, for a predetermined time and carbonized to obtain a carbon foam (carbonization process). In the present embodiment, the heat treatment temperature is a temperature equal to or higher than the softening point of the resin foam as a raw material. For example, when the resin foam is a melamine resin foam, since the softening point of the melamine resin foam is 300 °C to 400 °C, the heat treatment temperature is a temperature equal to or higher than the softening point. The heat treatment temperature for a melamine resin foam is preferably 800 °C or higher, and more preferably 1000 °C or higher. In addition, from the viewpoint of physical fragility caused by high crystallinity, the heat treatment temperature for a melamine resin foam is preferably 3000 °C or lower and more preferably 2500 °C or lower.

The time for keeping the resin foam at the heat treatment temperature (heat treatment time) is a time during which the resin foam as a raw material can be completely carbonized. For example, when the resin foam as a raw material is a melamine resin foam, the keeping time is 0.5 hours or longer. The keeping time for a melamine resin foam is preferably 1 hour or longer, more preferably 2 hours or longer. Furthermore, the keeping time for a melamine resin foam is preferably 5 hours or shorter, more preferably 4 hours or shorter in view of productivity.

Next, in step S4, the temperature inside the heat treatment furnace is lowered to room temperature (cooling process). From the viewpoint of mitigating the damage to the heaters and insulation material in the furnace caused by rapid cooling, the cooling rate upon the carbonization of the melamine resin foam is preferably 20 °C/min or lower. The cooling rate for the melamine resin foam is more preferably 15 °C/min or lower. Furthermore, from the viewpoint of overall productivity, the cooling rate for the melamine resin foam is more preferably 5 °C/min or higher. The cooling rate for the melamine resin foam is more preferably 10 °C/min or higher.

Finally, in step S5, the carbon foam is removed from the heat treatment furnace (carbon foam removing process). The carbon foam of the present disclosure can be produced in this way.

Moreover, the heating process and the carbonization process can be performed while applying a compressive load to the resin foam as a raw material, so that it is possible to obtain a carbon foam having a skeleton structure in which carbon fibers spread anisotropically. As described above, a carbon foam with anisotropy is capable of suppressing breakage of carbon fibers, reducing pulverization, and realizing high resilience even when a compressive load is applied thereon.

The compressive load can be applied by placing a weight such as a graphite plate on the resin foam as a raw material. The applied compressive load is preferably 50 Pa or more, and more preferably 200 Pa or more. In addition, the applied compressive load is preferably 2000 Pa or less and more preferably 1500 Pa or less.

When the compressing is performed using a vacuum press apparatus or the like, the membrane thickness may be determined after pressing with a spacer and the compression rate obtained by dividing the original thickness by the thickness of the spacer may be controlled, instead of control by press loading. In this case, the compression rate is preferably 4 times or more and more preferably 10 times or more from the viewpoint of providing anisotropy. In addition, the compression rate is preferably 100 times or less and more preferably 50 times or less from the viewpoint of maintaining the three-dimensional structure This vacuum press apparatus is not specifically limited as long as it is an apparatus that can evacuate active gases and compress a resin foam or an apparatus that can compress a stack of carbon foams can be used. For example, a heat treatment furnace equipped with a top plate for pressing a resin foam, a heater for heating the top plate, a gas exhaust port for evacuating gas from the apparatus, and a vacuum pump for reducing the pressure inside the apparatus to create a vacuum can be used.

When a compressive load is applied to the resin foam as a raw material, the diffusion of the decomposition gas is suppressed by the weight such as the graphite plate. Therefore, during the heating process, it is particularly preferable to reduce the heating rate as compared with the case where no compressive load is applied, and continue the decompression and evacuation while introducing inert gas into the furnace to promote the discharge of the decomposable gas.

For example, when the resin foam as a raw material is a melamine resin foam, it is preferable that the heating rate be 5 °C/min or lower in the temperature range of 200 °C or higher and lower than 800 °C (first temperature range), and more preferable that the heating rate be 2 °C/min or lower in the temperature range of 300 °C or higher and lower than 400 °C where the increasing rate of the generation amount of desorbed gas is high (second temperature range). Furthermore, it is preferable to supply inert gas such as nitrogen gas or argon gas into the heat treatment furnace in the temperature range of 200 °C or higher and lower than 800 °C (first temperature range).

The compressive stress on the resin foam as a raw material may be applied not only in one direction but also in two directions.

(Cathode catalyst layer)

The cathode catalyst layer is made of a precious metal-support catalyst and a proton-conducting ionomer. The cathode diffusion layer, the cathode catalyst layer, and the solid polymer electrolyte membrane are arranged in this order, and these layers are preferably joined each other, or the layers are in direct contact with one another from the viewpoint of reducing contact resistance.

From the viewpoint of catalytic activity, the catalyst layer of the present embodiment preferably includes at least one catalyst metal selected from the group consisting of platinum, ruthenium, rhodium, palladium, iridium, molybdenum, rhenium, tungsten, titanium, nickel, copper, zinc, silver, tin, gold, lead, and lanthanides.

The catalyst layer of the present embodiment preferably has a structure in which the catalyst metal is supported on a conductive support. The carrier is not particularly limited, but examples include carbon particles, alumina, silica, zeolite, and mesoporous materials. Supporting fine catalyst metal particles on a support tends to reduce the amount of catalyst metal used and also tends to increase the specific surface area per volume of the catalyst metal, which in turn tends to improve catalytic activity.

The conductive support in the catalyst layer of the present embodiment is preferably a carbon material from the viewpoint of physical stability when the catalyst metal is supported, conductivity at the contact point with the catalyst metal, chemical stability to the electrolyte, electrochemical stability in an electrolytic environment, and economic efficiency. Furthermore, the conductive carrier is preferably in particle form, from the viewpoint of forming the network structure, which is the more preferred form of the present embodiment, by a catalyst ink application method, as described below. From the above viewpoint, the conductive carrier is more preferably carbon particles.

The catalyst layer of the present embodiment has a structure in which the catalyst metal and the conductive carrier are in contact with each other, and this structure is called a network structure. This network structure preferably exhibits conductivity. The conductivity of the catalyst metal and the conductive carrier in contact with each other in a network structure tends to supply electrons more efficiently from the external circuit to the catalytically active sites.

The method of obtaining this network structure is not particularly limited, but an example is a catalyst ink application method described below.

The method of confirming conductivity provided by the network structure is not particularly limited. For example, a simple method is to bring a tester electrode to come in contact with the catalyst layer and measure the resistance, or a more precise method is to measure the sheet resistance or volume resistivity using a sheet resistance tester or the like.

The method of forming the catalyst layer of the present embodiment is particularly not limited, but examples includes, for example, a catalyst ink application method described below. In the catalyst ink application method, a catalyst ink is first prepared which contains the organic polymer and the catalyst metal and/or the conductive carrier and in which the organic polymer and the catalyst metal and/or the conductive carrier are uniformly dispersed in water and/or an organic solvent. When the catalyst ink is prepared, a dispersing agent may be used to uniformly disperse the organic polymer and the catalyst metal and/or the conductive carrier. In addition, the method of achieving uniform dispersion after the organic polymer, the catalyst metal and/or the conductive carrier are mixed with water and/or the organic solvent is particularly not limited, but examples includes, for example, achieving dispersion by an ultrasonic cleaner, magnetic stirrer, homogenizer, or the like, for example. The catalyst ink prepared as described above is applied to the substrate to form a wet film. The method of applying the catalyst ink is particularly not limited, but examples includes, for example, screen printing methods using a squeegee and applicator application methods. After removing the water and/or the organic solvent contained in the wet film by drying at room temperature, heating is performed to bind the organic polymer with the catalyst metal and/or the conductive carrier. The heating temperature is preferably equal to or higher than the glass transition temperature of the ionomer, and even more preferably equal to or lower than the decomposition temperature of the ionomer.

When heating, it is also preferable to apply a moderate load in the direction perpendicular to the wet film, as this tends to bind the organic polymer more firmly to the catalyst metal and/or conductive carrier and stabilize the film after heating. The wet film can be heated for a sufficient time (e.g., 30 minutes) as described above, and then heat is removed at room temperature to obtain the catalyst layer of the present embodiment.

(Solid polymer electrolyte membrane)

The solid polymer electrolyte membrane of the present embodiment is made of a proton-conductive material, and permeates protons while separating the cathode chamber and the anode chamber to inhibit mixing and diffusion of substances.

The thickness of the electrolyte membrane is preferably 10 μm or more, more preferably 20 μm or more, and most preferably 25 μm or more from the viewpoint of suppressing material diffusion. On the other hand, 300 μm or less is preferable, 250 μm or less is even more preferable, and 200 μm or less is most preferable from the viewpoint of lower resistance.

The electrolyte membrane of the present embodiment contains a perfluorocarbon polymer with ion-exchange groups. The perfluorocarbon polymer has an equivalent mass EW of ion exchange groups of 600 g/eq or more and 2000 g/eq or less

The electrolyte membrane of the present embodiment has a dimensional change ratio in at least one of the X direction and the Y direction of the following dimensional change ratios caused by immersion in a 2M sulfuric acid aqueous solution of 80% or more and less than 100%:

(dimensional change ratio caused by immersion in the 2M sulfuric acid aqueous solution)

a test electrolyte membrane with a water content of 1% or less is prepared, the test electrolyte membrane is immersed in a 2M sulfuric acid aqueous solution for 30 minutes at 25 °C, and the dimensional change ratio in the X-direction and the Y-direction perpendicular to the X-direction on a plane of the test electrolyte membrane is calculated using the following formula:

the dimensional change ratio (%) = (dimension in a specified direction after immersion) / (dimension in the specified direction before the immersion) $\times$ 100.

The electrolyte membrane of the present embodiment has a dimensional change ratio in at least one of the X direction and the Y direction of 80% or more and less than 100% and a dimensional change ratio in the Z direction of 115% or more of the following dimensional change ratios caused by immersion in distilled water:

(dimensional change ratio caused by immersion in distilled water)

a test electrolyte membrane with a water content of 1% or less is prepared, the test electrolyte membrane is immersed in distilled water at 25 °C for 30 minutes, and the dimensional change ratios in the X direction and the Y direction perpendicular to the X direction on a plane of the test electrolyte membrane, and the Z direction perpendicular to the X direction and the Y direction is calculated:

the dimensional change ratio (%) = (dimension in a specified direction after immersion) / (dimension in the specified direction before the immersion) $\times$ 100.

According to the configuration that satisfies the dimensional change ratios caused by immersion in a 2M sulfuric acid aqueous solution and the dimensional change ratios by immersion in distilled water described above, the complicity of the cluster structure (migration paths of ions and water molecules) in the electrolyte membrane is increased, and the high crystallinity suppresses swelling, thereby providing an electrolytic cell for organic hydride production wherein diffusion from the anode chamber to the cathode chamber is suppressed.

(Perfluorocarbon polymer)

The electrolyte membrane of the present embodiment contains a perfluorocarbon polymer with ion-exchange groups.

The ion exchange groups are not particularly limited, but examples include, for example, -COOH groups, -SO$_3$H groups, and -PO$_3$H$_2$ groups, or salts thereof. The salts are not particularly limited, but examples include, for example, alkali metal salts, alkaline earth metal salts, and amine salts.

(Equivalent mass EW)

The perfluorocarbon polymer is preferably 2000 g/eq or less, more preferably 1700 g/eq or less, and most preferably 1500 g/eq or less from the viewpoint of improving proton conductivity and reducing cell resistance. On the other hand, 600 g/eq or more is preferred, 700 g/eq or more is more preferred, and 750 g/eq or more is most preferred from the viewpoint of reducing water migration from the anode chamber to the cathode chamber.

Note that the equivalent mass EW means the dry mass (g) of the perfluorocarbon polymer per 1 equivalent of ion exchange groups.

The equivalent mass EW of the perfluorocarbon polymer can be determined by salt displacement of the perfluorocarbon polymer and back titration of the solution with an alkaline solution.

The equivalent weight EW can be adjusted by a copolymerization ratio of a fluorine-based monomer used as raw material for the perfluorocarbon polymer, selection of monomer species, or the like.

The perfluorocarbon polymer preferably contains the structure represented by the following formula (1).

$$-[CF_2-CX1X2]a-[CF_2-CF(-O-(CF_2-CF(CF_2X3))b-Oc-(CFR1)d-(CFR2)e-(CF_2)f-X4)]g-\ ...\quad (1)$$

X1, X2, X3, R1, R2, and a to g in the formula (1) are each defined as follows.

X1, X2, and X3 are each independently a halogen atom or a perfluoroalkyl group with a carbon number of 1 to 3.

The halogen atom is not particularly limited, but examples include, for example, a fluorine atom, a chlorine atom, a bromine atom, and an iodine atom. The perfluoroalkyl group with a carbon number of 1 to 3 is not particularly limited, but examples include, for example, a trifluoromethyl group, pentafluoroethyl group, perfluoro n-propyl group, and perfluoroisopropyl group.

X1, X2, and X3 are preferably each independently a fluorine atom or a perfluoroalkyl group with a carbon number of 1 to 3, more preferably a fluorine atom, from the viewpoint of chemical stability such as resistance to oxidative degradation of the polymer.

X4 is a $-COOZ$ group, $-SO_3Z$ group, $-PO_3Z_2$ group, or $-PO_3HZ$ group.

Z is a hydrogen atom, alkali metal atom, alkaline earth metal atom, $NH_4$, $NH_3R11$, $NH_2R11R12$, $NHR11R12R13$, or $NR11R12R13R14$.

where R11, R12, R13, and R14 are each independently an alkyl group or an aryl group. The alkyl group of R11, R12, R13, and R14 is preferably an alkyl group with a carbon number of 1 to 6, more preferably a methyl group, ethyl group, n-propyl group, isopropyl group, n-butyl group, sec-butyl group, isobutyl group, or n-hexyl group. The aryl group is particularly not limited, but examples include, for example, a phenyl group and naphthyl group.

When X4 is a $-PO_3Z_2$ group, Z may be the same or different. The alkali metal atom is not particularly limited, but include, for example, a lithium atom, a sodium atom, and a potassium atom. The alkaline earth metal atom is not particularly limited, but examples include, for example, a calcium atom and a magnesium atom. As X4, $SO_3Z$ is preferred from the viewpoint of chemical stability, such as resistance to oxidative degradation of the polymer.

R1 and R2 are each independently a halogen atom, a perfluoroalkyl group with a carbon number of 1 to 10, or a fluorochloroalkyl group. Here, the halogen atom in R1 and R2 is not particularly limited, but examples include, for example, a fluorine atom, a chlorine atom, a bromine atom, and an iodine atom. Among them, a fluorine atom is preferred.

*a* and g are numbers that satisfy $0 \leq a < 1$, $0 < g \leq 1$, and $a + g = 1$. b is an integer from 0 to 8. c is 0 or 1. d, e, and f are each independently an integer from 0 to 6. However, d, e and f cannot be all zero.

Note that the sequence and order of the structural unit of $[CF_2-CX1X2]$ and the structural unit of $[CF_2-CF(-O-(CF_2-CF(CF_2X3))b-Oc-(CFR1)d-(CFR2)e-(CF_2)f-X4)]$ are not particularly limited and may be random or blocked.

The perfluorocarbon polymer in the present embodiment is preferably a perfluorocarbon sulfonic acid resin (hereinafter also referred to as "PFSA resin") because the effect of the present embodiment tends to be more pronounced. The PFSA resin in the present embodiment is a resin having a main chain consisting of a PTFE backbone chain, to which a perfluorocarbon as side chain and one or two or more sulfonic acid groups (in some cases, a part of these may be in salt form) attached to each side chain.

A PFSA resin preferably contains a repeating unit represented by $-[CF_2CF_2]-$ and a repeating unit derived from a compound represented by the following formula (3), (4-1), or (4-2).

$$CF_2=CF(-O-(CF_2CFXO)n-[A])\ ...\quad (3)$$

(In the formula (3), X is F or a perfluoroalkyl group with a carbon number of 1 to 3, and n is an integer from 0 to 5. [A] is $(CF_2)m-SO_3H$, where m represents an integer from 0 to 6. However, n and m cannot be both zero.)

$$CF_2=CF-O-(CF_2)P-CFX(-O-(CF_2)K-SO_3H)\ ...\quad (4-1)$$

$$CF_2=CF-O-(CF_2)P-CFX(-(CF_2)L-O-(CF_2)_m-SO_3H)\ ...\quad (4-2)$$

(In the formulas (4-1) and (4-2), X is a perfluoroalkyl group with a carbon number of 1 to 3, P is an integer from 0 to 12, K is an integer from 1 to 5, L is an integer from 1 to 5, and m is an integer from 0 to 6. (However, K and L can be the same or different, and P, K, and L cannot be all zero.)

Furthermore, the PFSA resin is a copolymer having a repeating unit represented by $-[CF_2CF_2]-$ and a repeating unit represented by $-[CF_2-CF(-O-(CF_2CFXO)n-(CF_2)_M-SO_3H)]-$ (in the formulae, X is F or $CF_3$, n is an integer from 0 to 5, and m is an integer from 0 to 12. However, n and m cannot be both zero), and is more preferably a copolymer having at least one repeating unit represented by $-[CF_2-CF(-O-(CF_2CFXO)n-(CF_2)_m-SO_3H)]-$ (in the formula, X is $CF_3$, n is 0 or 1, and m is an integer from 0 to 12. However, n and m cannot be both zero.) When the PFSA resin is a copolymer having the above structure and the certain equivalent mass EW, the resulting electrolyte membrane tends to be sufficiently hydrophilic and highly resistant to electrolyte active materials, such as pentavalent vanadium.

In addition, the repeating unit of PFSA resin includes a repeating unit represented by $-[CF_2-CF(-O-(CF_2CFXO)n-(CF_2)_m-SO_3H)]-$ (in the formula, n is 0 and m is an integer from 1 to 6), or includes both repeating units represented by $-[CF_2-CF(-O-(CF_2)P-CFX(-O-(CF_2)K-SO_3H))]-$ and $-[CF_2-CFX(-O-(CF_2)P-CFX(-(CF_2)L-O-(CF_2)_m-SO_3H))]-$ derived from the compound represented by the formula (4-1) and the formula (4-2), respectively, the equivalent mass (EW) tends to be lower and the resulting electrolyte membrane tends to be more hydrophilic.

It is more preferred that the perfluorocarbon polymer represented by the formula (1) in the present embodiment has the structure represented by the formula (2) below, because the effect of the present embodiment tends to be more pronounced.

$$-[CF_2CF_2]a-[CF_2-CF(-O-(CF_2)_m-SO_3H)]g- \qquad (2)$$

In the formula (2), a and g are numbers satisfying $0 \leq a < 1$ and $0 < g \leq 1$, $a + g = 1$, and m is an integer from 1 to 6.

The perfluorocarbon polymer in the present embodiment is not particularly limited as long as it has a structure represented by the formula (1) or the formula (2), and may include other structures.

The perfluorocarbon polymer in the present embodiment may be partially cross-linked directly or indirectly between molecules with ion exchange groups from the viewpoint of controlling solubility or swelling. By partial cross-linking, for example, the water solubility of the perfluorocarbon polymer can be reduced (the water resistance improves) even if the equivalent mass EW of the perfluorocarbon polymer is about 500 g/eq.

Additionally, when the perfluorocarbon polymer has a low melt flow value (has a high molecular weight), the aforementioned partial cross-linking can increase intermolecular entanglement and reduce solubility and over-swelling.

Examples of the partial cross-linking reaction include, for example, reactions between ion-exchange groups and functional groups or main chains of other molecules, or reactions between ion-exchange groups, cross-linking reactions (covalent bonding) via oxidation-resistant low molecular weight compounds, oligomers, or polymeric substances, etc., and may include, in some cases, reactions with salt forming substances (including ionic bonding with $-SO_3H$ groups). Examples of oxidation-resistant low molecular weight compounds, oligomers, or polymeric substances include polyhydric alcohols and organic diamines.

The molecular weight of the perfluorocarbon polymer in the present embodiment is not particularly limited, but the value of the melt flow index (MFI) measured according to ASTM: D1238 (measurement conditions: at a temperature of 270 °C and under a load of 2160 g) of preferably 0.05 g/10 minutes or more and 50 g/10 minutes or less, more preferably 0.1 g/10 minutes or more and 30 g/10 minutes or less, and even more preferably 0.5 g/10 minutes or more and 20 g/10 minutes or less.

(Production method of perfluorocarbon polymer)

The perfluorocarbon polymer in the present embodiment is not particularly limited, but can be obtained, for example, by producing a precursor of the perfluorocarbon polymer having ion-exchange groups (hereinafter also referred to as "resin precursor") and then hydrolyzing it.

In the case of a PFSA resin, for example, it is obtained by hydrolyzing a PFSA resin precursor consisting of a copolymer of a polyvinyl ether fluoride compound represented by the formula (6) or the formula (7) below and a fluorinated olefin monomer represented by the formula (8) below.

$$CF_2=CF-O-(CF_2CFXO)n-A \qquad (6)$$

(In the formula (6), X is F or a perfluoroalkyl group with a carbon number of 1 to 3, n is an integer from 0 to 5, and A is $(CF_2)_m-W$, where m is an integer from 0 to 6, n and m cannot be both 0, and W is a functional group that can be converted to $-SO_3H$ group by hydrolysis.)

$$CF_2=CF-O-(CF_2)P-CFX(-O-(CF_2)K-W) \quad \text{or} \quad CF_2=CF-O \quad -(CF_2)P-CFX(-(CF_2)L-O-(CF_2)_m-W) \qquad (7)$$

(In the formula (7), X is a perfluoroalkyl group with a carbon number of 1 to 3, P is an integer from 0 to 12, K is an integer from 1 to 5, and L is an integer from 1 to 5, where L, K and m cannot be both 0. m is an integer from 0 to 6, and W is a functional group that can be converted to an -$SO_3H$ group by hydrolysis.)

$$CF_2=CFZ \qquad (8)$$

(In the formula (8), Z is H, Cl, F, a perfluoroalkyl group with a carbon number of 1 to 3, or a cyclic perfluoroalkyl group that may contain oxygen as a ring constituent atom.)

W in the formulas (6) and (7) is not particularly limited to, but examples include an -$SO_2F$ group, -$SO_2Cl$ group, and -$SO_2Br$ group, for example. In addition, it is preferable that X is $CF_3$, W is an -$SO_2F$ group in the formulas (6) and (7) above and Z is F in the formula (8) above. Among them, it is more preferable that n is an integer of 0, m is an integer from 1 to 6, X is $CF_3$, W is an -$SO_2F$ group, and Z is F because a solution with high hydrophilicity and high resin concentration can be obtained.

The resin precursor in the present embodiment can be synthesized by known means. For example, it can be produced by polymerizing a vinyl fluoride compound having a group (ion-exchange group precursor group) that can be converted to an ion-exchange group (X4 in the formula (1)) by hydrolysis, etc., and a fluorinated olefin such as tetrafluoroethylene (hereinafter referred to as "TFE"), in the presence of a radical precursor such as a peroxide. The above polymerization method is not particularly limited. Methods that can be used include the method of polymerization by filling and dissolving to react gases of the vinyl fluoride compound and the fluorinated olefin in a polymerization solvent containing a fluorinated hydrocarbon and reacting them (solution polymerization), the method of polymerization, using a vinyl fluoride compound per se as the polymerization solvent without using a solvent containing a fluorinated hydrocarbon and the like (bulk polymerization), the method of polymerization by filling to react gases of the vinyl fluoride compound and the fluorinated olefin in an aqueous solution of a surfactant as the medium (emulsifying polymerization), the method of polymerization by filling and emulsifying to react gases of the vinyl fluoride compound and the fluorinated olefin in an aqueous solution of a surfactant and a co-emulsifier such as alcohol (emulsion polymerization), and the method of polymerization by filling and suspending to react gases of the vinyl fluoride compound and the fluorinated olefin in an aqueous solution of a suspending stabilizer (suspension polymerization).

The resin precursor in the present embodiment can be prepared by any of the polymerization methods described above. A block or tapered polymer obtained by adjusting polymerization conditions, such as the amount of TFE gas supplied, may also be used as a resin precursor.

The resin precursor may be fluorinated by treating impure ends formed in the resin molecular structure during the polymerization reaction or structurally oxidizable portions (CO groups, H-bond portions, etc.) in the presence of fluorine gas by known methods.

In the resin precursor, ion exchange group precursor groups (e.g., - $SO_2F$ groups) may be partially (including intermolecularly) imidized (e.g., alkyl imidized).

The molecular weight of the resin precursor is not particularly limited, but the precursor has a value of a melt flow index (MFI) as measured in accordance with ASTM: D1238 (measurement conditions: at a temperature of 270 °C under a load of 2160 g) of 0.05 g/10 minutes or more and 50 g/10 minutes or less, more preferably 0.1 g/10 minutes or more and 30 g/10 minutes or less, and even more preferably 0.5 g/10 minutes or more and 20 g/10 minutes or less.

The form of the resin precursor is not particularly limited, but from the viewpoint of increasing the rates of the treatments in the hydrolysis treatment and the acid treatment described below, it is preferable that the resin precursor is, for example, in the form of pellets of 0.5 $cm^3$ or less, a dispersed liquid, or powder particles. Among them, it is more preferable to use the powdered form after polymerization. From the viewpoint of cost, an extruded resin precursor in the form of membrane may be used.

The method of producing the perfluorocarbon polymer in the present embodiment from the resin precursor is not particularly limited. For example, the resin precursor is extruded using an extruder by a nozzle or die, and then subjected to hydrolysis treatment, or the polymerized product as it is, e.g., in the form of dispersion liquid, or precipitated or filtered powder, is subjected to hydrolysis treatment.

Specifically, the resin precursor obtained as described above and molded as needed can continue to be immersed in the basic reaction liquid and subjected to hydrolysis treatment. The basic reaction solution used in the hydrolysis treatment is not particularly limited, but examples include, for example, aqueous solutions of amine compounds such as dimethylamine, diethylamine, monomethylamine, and monoethylamine, and aqueous solutions of alkali metal or alkaline earth metal hydroxides. Among these, an aqueous solution of sodium hydroxide or potassium hydroxide is preferred. When a hydroxide of an alkali metal or alkaline earth metal is used, the content thereof is not particularly limited, but is preferably 10 mass% or more and 30 mass% or less with respect to the entire reaction solution. It is more preferred that the above reaction solution also contains an expansive organic compound, such as methyl alcohol, ethyl alcohol, acetone, and dimethyl sulfoxide (DMSO). The content of the expansive organic compound is preferably 1 mass% or more and 30 mass% or less with respect to the entire reaction solution.

After the resin precursor is subjected to hydrolysis treatment in the basic reaction liquid, it is sufficiently rinsed with warm water, etc., followed by acid treatment. The acid used for acid treatment is not particularly limited, but examples include, for example, mineral acids such as hydrochloric acid, sulfuric acid, and nitric acid, and organic acids such as oxalic acid, acetic acid, formic acid, and trifluoroacetic acid. Mixtures of these acids with water are preferred. One of these acids may be used alone, or two or more of these acids may be used together. The basic reaction solution used in the hydrolysis treatment may be removed in advance prior to acid treatment by treatment with a cation exchange resin or other means.

The acid treatment protonates the ion-exchange group precursor groups of the resin precursor to form ion-exchange groups. For example, in the case of a resin precursor produced using the formula (6) above, W in the formula (6) is protonated by acid treatment to be converted to $-SO_3H$ groups. The perfluorocarbon polymer obtained by hydrolysis treatment and acid treatment can be dispersed or dissolved in a protic organic solvent, water, or a mixture of both to form a suspension or solution.

The perfluorocarbon polymer may contain an alkali metal, an alkaline earth metal, and other radical degradable transition metals (Ce compounds, Mn compounds, etc.) in the form of partial salts with them (about 0.01 to 5 equivalent % of the total equivalent of ion exchange groups), or alone or in combination with a basic polymer as described below.

From the viewpoint of better electrical resistance and mechanical strength, the electrolyte membrane of the present embodiment preferably contains a mixture of two or more perfluorocarbon polymers that have ion exchange groups and different monomer structures.

By mixing two or more perfluorocarbon polymers, functions of these can be combined together to thereby provide excellent properties.

Furthermore, from the viewpoint of better mechanical strength, when two or more perfluorocarbon polymers are mixed, it is preferable that the ratio of the polymer having a higher equivalent mass EW is more than 50 mass%, more preferably more than 55 mass%, and even more preferably more than 60 mass%. Since polymers with higher equivalent mass EW tend to be more crystalline, higher mechanical strength tends to be exhibited when the above ratio is satisfied.

(Production method of raw material membrane of the perfluorocarbon polymer)

The raw material membrane used in the production of the electrolyte membrane of the present embodiment is obtained by processing the precursor resin or the perfluorocarbon polymer into the form of film by known methods. For example, the aforementioned perfluorocarbon polymer precursor can be melt kneaded to form a film using an extruder, followed by hydrolysis to form ion-exchange groups. Alternatively, once the perfluorocarbon polymer is dispersed in a solvent, the film may be formed by cast film forming on a substrate.

(Method of stretching raw material membrane of perfluorocarbon polymer)

The production method of an electrolyte membrane according to the present embodiment includes the step of stretching the raw material membrane under heat.

The production method of the present embodiment further includes a step of performing a relaxation treatment in the cooling process after the stretching step described above.

In other words, the electrolyte membrane of the present embodiment is stretched under heating and cooled with a relaxation rate of preferably 0.1% or more and 5.0% or less to eliminate crazing and suppress self-discharge.

The stretching step in the present embodiment can be performed, for example, by uniaxial stretching, simultaneous biaxial stretching, or sequential biaxial stretching.

In the present disclosure, the x-axis direction refers to the winding direction (MD direction) when a long film is produced by extrusion film forming or cast film forming, etc., and the y-axis direction refers to the direction perpendicular to the MD direction (TD direction).

From the viewpoint of suppressing deflection of the membrane when incorporated into a cell, a stretching ratio of 1.5 times is preferred, 1.8 times is more preferred, 2.1 times is even more preferred, and 2.5 times is even more preferred in at least one axial direction. From the viewpoint of suppressing craze generation and improving the selectivity of transmitted ions, 8 times or less is preferred, 6 times or less is more preferred, 5 times or less is even more preferred, and 4 times or less is even more preferred. In the present disclosure, the stretching ratios in the x-axis direction and the y-axis direction can be set independently. The area stretching ratio, which is the multiplication of the stretching ratio in the x-axis direction by the stretching ratio in the y-axis direction, is preferably 2.2 times or more, more preferably 3.2 times or more, and even more preferably 4.0 times or more from the viewpoint of improving the selectivity of the transmitted ions. From the viewpoint of suppressing crazing, the area stretching ratio is preferably 50 times or less, more preferably 40 times or less, and even more preferably 30 times or less.

Biaxial stretching is preferred from the viewpoint of controlling the cluster size in the electrolyte membrane and further improving the selective permeability of ions. In other words, the electrolyte membrane of the present embodiment is preferably a biaxially stretched electrolyte membrane. In the present embodiment, a membrane of the perfluorocarbon polymer with ion-exchange groups is first subjected to simultaneous biaxial stretching in a temperature range from the temperature lower than the $\alpha$-dispersion temperature of the polymer by 20 °C, to the temperature higher than the $\alpha$-dispersion temperature by 40 °C.

The $\alpha$-dispersion temperature of a membrane of the perfluorocarbon polymer with ion-exchange groups is the temperature at which the main chain of the polymer is considered to start thermal motion, as measured by a dynamic viscoelasticity measuring device. For example, since the $\alpha$-dispersion temperature of a polymer such as nylon is generally much higher than room temperature, cooling to a temperature equal to or higher than the $\alpha$-dispersion temperature after stretching is completed can greatly reduce the thermal motion of the main chain, thereby effectively stabilizing the stretch orientation.

For example, when the ion exchange group is a sulfonic acid group, the a-dispersion temperature of the perfluorocarbon polymers is in the vicinity of 110 to 140 °C. Therefore, in the case where the a-dispersion temperature is 140 °C, for example, the stretching temperature in the stretching step is set within a temperature range of 120 °C or higher and 180 °C or lower.

The present embodiment is also characterized in that the membrane stretched by the stretching step is continuously heat-treated at a temperature higher than the stretching temperature while the membrane is fixed.

Fixing the membrane means fixing the surroundings of the membrane so that the orientation of the stretched membrane is not relaxed. Specifically, it is suffice that ends of the membrane are fixed, and an apparatus such as a chucking tenter can be used to fix ends of the electrolyte membrane.

From the viewpoint of suppressing orientation relaxation, a stretching speed during the stretching step is preferably 10 mm/min or more, more preferably 50 mm/min or more, and even more preferably 90 mm/min or more. On the other hand, from the viewpoint of suppressing rupture, the stretching speed is preferably 500 mm/min or less, more preferably 300 m/min or less, and even more preferably 200 m/min or less.

The method of producing the electrolyte membrane of the present embodiment preferably further includes a step of performing a relaxation treatment in the cooling process after the stretching step.

In the present embodiment, the relaxation treatment after the stretching step is achieved by narrowing the chuck spacing by a predetermined distance. The ratio (relaxation ratio) of the narrowed distance relative to the chuck spacing is preferably 0.1% or more, more preferably 0.2% or more, and even more preferably 0.4% or more from the viewpoint of suppressing breakage. On the other hand, from the viewpoint of suppressing orientation relaxation, 3% or less is preferred, 2% or less is more preferred, and 1.5% or less is even more preferred. This relieves the stress caused by shrinkage during cooling and produces a stretched membrane without minute defects in the membrane, thus obtaining an electrolyte membrane that suppresses water permeation from the anode chamber to the cathode chamber when an electrolytic cell for organic hydride production is formed.

(Flatness)

The flatness index in the electrolyte membrane of the present embodiment is preferably less than 1.2, more preferably less than 1.1, and even more preferably less than 1.05 from the viewpoint of good workability during assembly of the electrolytic cell for organic hydride production. The flatness index of the electrolyte membrane is the ratio of the length along the membrane plane to the projected dimension of the membrane. A specific measurement method is as described in Examples. It is sufficient that the flatness index of the electrolyte membrane satisfies the above numerical values on any surface, preferably satisfies on any surface cut out to 140 mm squares.

(Craze area ratio)

The craze area ratio in the electrolyte membrane of the present embodiment is preferably 1.5% or less, more preferably 1.0% or less, and even more preferably 0.8% or less from the viewpoint of suppressing water permeation from the anode chamber to the cathode chamber. The craze area ratio is, for example, 0% or more.

The craze area is defined as the ratio of the area of the region with a permeability of 10% or more relative to the total area of the electrolyte membrane. The craze area can be determined by measuring the visible light transmittance distribution within the electrolyte membrane plane, and more specifically by the method described in Examples.

(Orientation parameter)

The orientation parameter of the present embodiment, either in the in-membrane plane or the plane perpendicular to the membrane plane (out-of-membrane plane), is preferably 0.05 or more, more preferably 0.15 or more, and even more preferably 0.20 or more, from the viewpoint of transmitted ion selectivity. The upper limit of the orientation parameter is not particularly limited, but it is preferably 0.70 or less, more preferably 0.60 or less, and even more preferably 0.50 or less from the viewpoint of suppressing the reduction of membrane strength due to crazing.

The orientation parameter of the plane perpendicular to the membrane plane (hereinafter referred to as "out-of-membrane plane orientation parameter") is preferably 0.15 or more, more preferably 0.20 or more, and even more preferably 0.25 or more from the viewpoint of suppressing self-discharge. The upper limit of the orientation parameter of the plane perpendicular to the membrane plane is not particularly limited, but it is preferably 0.70 or less, more preferably 0.60 or less, and even more preferably 0.50 or less.

By orienting the electrolyte membrane under specific conditions to achieve the range of orientation parameters described above, the cluster shape in the thickness direction can be controlled to form a membrane with suppressed crazes, which are minute defects in the membrane, thereby effectively suppressing water permeation from the anode chamber to the cathode chamber without inhibiting proton transfer.

The in-membrane plane orientation parameter and the out-of-membrane plane orientation parameters q can be determined by approximating the azimuthal intensity distribution I(ϕ) of the peak derived from ion clusters in small-angle X-ray scattering, as described below, using the orientation function represented by the following expression:

[Math 1]

$$I(\emptyset) = Q \frac{1 - q^2}{1 + q^2 - 2q \cos \emptyset}$$

where Q is a constant, ϕ is the azimuth, and q is the orientation parameter.

(Ion cluster diameter)

The ion cluster diameter of the present embodiment can be measured by small-angle X-ray scattering (SAXS) for the membrane plane direction and for the direction perpendicular to the membrane plane. The ion cluster diameter in the membrane plane direction is preferably 2.5 nm or more, more preferably 2.7 nm or more, and even more preferably 2.8 nm or more from the viewpoint of reducing the resistance component when an electrolytic cell for organic hydride production is formed. In addition, the ion cluster diameter in the membrane plane direction is preferably 3.9 nm or less, more preferably 3.5 nm or less, and even more preferably 3.2 nm or less from the viewpoint of controlling swelling of the electrolyte membrane and water permeation from the anode chamber to the cathode chamber.

The ion cluster diameter in the direction perpendicular to the membrane plane (hereinafter referred to as "ion cluster diameter in the out-of-membrane plane direction") is preferably 3.0 nm or more, more preferably 3.3 nm or more, and even more preferably 3.4 nm or more from the viewpoint of suppressing water permeation from the anode chamber to the cathode chamber. The ion cluster diameter in the out-of-membrane plane direction is not limited, but 3.9 nm or less is preferred, 3.7 nm or less is more preferred, and 3.6 nm or less is even more preferred.

(Crystal long period)

The crystal long period measured by small-angle X-ray scattering in the electrolyte membrane of the present embodiment is determined using the Bragg equation from the position of the peak derived from the periodicity of the electron density difference between crystalline and amorphous structures, which occurs in the scattering vector range of 0.1 to 1.0 nm$^{-1}$ in small-angle X-ray scattering.

The crystal long period measured by small angle X-ray scattering is preferably 5 nm or more and 60 nm or less, more preferably 10 nm or more and 55 nm, even more preferably 20 nm or more and 50 nm or less, and still even more preferably 30 nm or more and 50 nm or less.

The peak intensity of the crystal long period measured by small-angle X-ray scattering is defined as the ratio of the difference between the peak top intensity and the baseline intensity, relative to the baseline intensity of the crystal long period peak that occurs in the scattering vector range of 0.1 to 1.0 nm$^{-1}$ in small-angle X-ray scattering. From the viewpoint of improving current efficiency, the peak intensity is preferably 0.5 or less, more preferably 0.3 or less, even more preferably 0.2 or less, and still even more preferably 0.1 or less.

The thickness of the raw material membrane to be stretched in the present embodiment can be calculated according to the target stretching ratio.

The electrolyte membrane of the present embodiment is suitable for use in the diaphragm of an electrolytic cell for organic hydride production. In general, an electrolyte membrane made of a perfluorocarbon polymer with ion-exchange groups swells and undergoes dimensional changes when brought in contact with distilled water, sulfuric acid solutions, or aqueous solutions. Even when the electrolyte membrane of the present embodiment is brought in contact with these aqueous solutions, swelling is suppressed and dimensional changes in the membrane plane direction are suppressed. Therefore, when an electrolytic cell for organic hydride production is assembled, the membrane can be used by being filled with an aqueous anode solution and the substance to be hydrogenated without deflection of the membrane and without degradation of electrical properties.

(Dimensional change ratio caused by immersion in 2M sulfuric acid aqueous solution)

The dimensional change ratio of at least one of the X direction and the Y direction of the dimensional change ratios of the electrolyte membrane of the present embodiment immersed in a 2M sulfuric acid aqueous solution is 80% or more and less than 100% from the viewpoint of preventing deflection in the electrolytic cell for organic hydride production and preventing degrading of the electrical properties.

A test electrolyte membrane with a water content of 1% or less is prepared, the test electrolyte membrane is immersed in a 2M sulfuric acid aqueous solution for 30 minutes at 25 °C, and the dimensional change ratio in the X-direction and the Y-direction perpendicular to the X-direction on a plane of the test electrolyte membrane is calculated using the following formula.

Dimensional change ratio (%) = (dimension in a specified direction after immersion) / (dimension in the specified direction before the immersion) $\times$ 100

The dimensional change ratio of at least one of the X direction and the Y direction of the dimensional change ratios of the electrolyte membrane of the present embodiment immersed in a 2M sulfuric acid aqueous solution is preferably 99.8% or less, more preferably 99.5% or less, even more preferably 99.2% or less, and still even more preferably 99.0% or less from the viewpoint of preventing deflection in the electrolytic cell for organic hydride production and preventing reduction in the electrical characteristics. The dimensional change ratio of at least one of the X direction and the Y direction is preferably 85% or more, more preferably 90% or more, even more preferably 95.0% or more, and still even more preferably 97.0% or more from the viewpoint of reducing stress and providing good long-term durability.

More specifically, the dimensional change ratio caused by immersion in a 2M sulfuric acid aqueous solution can be evaluated by, for example, cutting an electrolyte membrane adjusted to a water content of 1% or less into a piece of 7 cm squares and measuring the dimensions after immersion in a 2M sulfuric acid aqueous solution at 25 °C for 30 minutes. Specifically, the water content ratio can be measured by the method disclosed in the Examples section. If the water content ratio exceeds 1%, it can be adjusted by drying in an oven heated to 50 °C under reduced pressure for 2 hours and measuring the water content ratio again.

Note that the X direction is an arbitrarily selected direction on the membrane plane, and the Y direction refers to the direction perpendicular to the X direction on the membrane plane.

In addition, the dimensional change ratios caused by immersion in a 2M sulfuric acid aqueous solution can be evaluated with high accuracy, for example, by using a D2XY-KSH measuring microscope manufactured by NIHON KOKI SEISAKUSHO CO., LTD. If it is difficult to obtain a test piece of 7 cm squares, for example, a strip-shaped test piece of 1 cm $\times$ 3 cm can also be used for the measurement. In this case, the evaluation can be made more accurately by using two specimens, 3 cm in each of the X direction and the Y direction on the membrane plane.

The dimensional change ratio caused by immersion in a 2M sulfuric acid aqueous solution can be set in the above range by adjusting, for example, the type of the perfluorocarbon polymer used in the electrolyte membrane, the stretching ratio and relaxation rate during production of the electrolyte membrane, and the like.

(Dimensional change ratio caused by immersion in distilled water)

Of the dimensional change ratios of the electrolyte membrane immersed in distilled water, the dimensional change ratio of at least one of the X direction and the Y direction is 80% or more and less than 100%, and the dimensional change ratio of the Z direction is 115% or more, from the viewpoint of preventing deflection in the electrolytic cell for organic hydride production and preventing reduction in the electrical characteristics.

The dimensional change ratio of at least one of the X direction and the Y direction of the dimensional change ratios caused by immersion in distilled water is preferably 99.8% or less, more preferably 99.5% or less, even more preferably 99.2% or less, and still even more preferably 99.0% or less, from the viewpoint of preventing deflection in the electrolytic cell for organic hydride production and preventing degrading of the electrical properties. The dimensional change ratio of at least one of the X direction and the Y direction is preferably 85% or more, more preferably 90% or more, even more preferably 93.0% or more, and still even more preferably 94.0% from the viewpoint of reducing stress and providing good long-term durability.

The dimensional change ratio in the Z-direction of the dimensional change ratios caused by immersion in distilled water is preferably 115% or more, even more preferably 120% or more, and still even more preferably 125% or more from the viewpoint of retaining water and improving proton conductivity. The dimensional change ratio in the z-direction is preferably 160% or less, more preferably 150% or less, even more preferably 140% or less, still even more preferably 130% or less from the viewpoint of reducing the water content of the membrane and inhibiting water permeation from the anode chamber to the cathode chamber.

More specifically, the dimensional change ratio caused by immersion in distilled water can be evaluated by cutting an electrolyte membrane adjusted to a water content ratio of 1% or less into a piece of 7 cm squares and measuring the dimensions after immersion in distilled water at 25 °C for 30 minutes. Specifically, the water content ratio can be measured by the method disclosed in the Examples section. If the water content ratio exceeds 1%, it can be adjusted by drying in an oven heated to 50 °C under reduced pressure for 2 hours and measuring the water content ratio again.

Note that the X direction is an arbitrarily selected direction on the membrane plane, and the Y direction refers to the direction perpendicular to the X direction on the membrane plane. The Z direction refers to the direction perpendicular to the X direction and the Y direction.

In addition, the dimensional change ratios caused by immersion in distilled water can be evaluated with high accuracy, for example, by using a D2XY-KSH measuring microscope manufactured by NIHON KOKI SEISAKUSHO CO., LTD. If it is difficult to obtain a test piece of 7 cm squares, for example, a strip-shaped test piece of 1 cm × 3 cm can also be used for the measurement. In this case, the evaluation can be made more accurately by using two specimens, each 3 cm in the arbitrary X direction or Y direction on the membrane plane.

If the electrolyte membrane is swelled with distilled water, it can be dried so that the water content ratio of the electrolyte membrane is 1% or less before use in the measurement. If the membrane is swelled with a substance other than distilled water, e.g., a sulfuric acid solution, it can be rinsed with distilled water until the rinsed solution has a pH of 6.0 or higher, and then dried so that the water content of the electrolyte membrane is 1% or less before use in the measurement.

Dimensional change ratios of the dimensional change ratios caused by immersion in distilled water can be set in the range described above by adjusting, for example, the type of the perfluorocarbon polymer used in the electrolyte membrane, the stretching ratio and relaxation rate during production of the electrolyte membrane, and the like.

(YI value)

The YI value (yellowness) of the electrolyte membrane of the present embodiment is preferably 9.00 or less, more preferably 3.00 or less, and even more preferably 1.00 or less from the viewpoint of suppressing resistance due to leaching of components in the membrane and adhesion to the catalyst layer.

The increase in the YI value of the electrolyte membrane is caused by the decomposition and denaturation of solvents, additives, and low molecular weight components present in the electrolyte membrane upon heating. The YI value of the electrolyte membrane can be kept low by washing with distilled water, etc. to remove these components in the electrolyte membrane in advance, or by drying under a reduced pressure or an inert gas flow at 50 °C or lower, for example. In addition, when the electrolyte membrane is produced by stretching the raw material membrane, the YI value can also be kept low by increasing the exhaust air volume in the apparatus when the raw material membrane is stretched or by stretching it under an inert gas flow.

Specifically, a measurement of the YI value can be conducted by cutting the electrolyte membranes into a piece of 5 cm squares and measuring transmission using a D65 light source in "Spectrophotometer: SE600" manufactured by NIPPON DENSHOKU INDUSTRIES Co., Ltd. As for the thickness of the electrolyte membrane, a sample of 75 $\mu$m may be used, or a sample adjusted to 75 $\mu$m by lamination may be used. In addition, for example, the YI values of membrane with three different thicknesses, such as 25 $\mu$m, 50 $\mu$m, and 100 $\mu$m, may be measured, and the YI value at 75 $\mu$m may be determined from the linear relationship of plots of the YI values versus the thicknesses.

(Anode electrode)

The anode electrode has an electrically conductive support and an anode catalyst. The support for the anode electrode is preferably 0.1 mm or more, and more preferably 0.3 mm or more from the viewpoint of higher mechanical strength and better handling. On the other hand, from the viewpoint of reducing cell size, 5.0 mm or less is preferable, and 3.0 mm or less is more preferable. It is preferable to have a mesh structure from the viewpoint of removing oxygen gas generated at the anode and suppressing increased resistance due to bubbles adhering to the surface. In addition, the anode electrode to generate oxygen gas is preferably porous to prevent increased resistance due to bubbles and to promote the supply of the electrolyte, and preferably has excellent resistance to acid corrosion. From this viewpoint, it is preferable that it is made of titanium.

The anode catalyst is supported on the surface of the support for the anode electrode and is immersed in water or acidic electrolyte, and is preferably a platinum group precious metal oxide-based catalyst. Of these, iridium oxide-based electrocatalyst materials are particularly preferred from the standpoint of durability.

(Organic compound to be hydrogenated)

As for the catalyst layer of the present embodiment, at least some or all of organic compounds to be hydrogenated are preferably aromatic compounds. Furthermore, as for the catalyst layer of the present embodiment, the aromatic compound is preferably at least one selected from the group consisting of benzene, naphthalene, anthracene, toluene, xylene, diphenylmethane, diphenylethane, triphenylmethane, dibenzyltoluene, phenol, pyridine, pyrimidine, pyrazine, quinoline, and isoquinoline. One of these aromatic compounds may be used alone or two or more of them are used in combination. It is also more preferred that the organic compound to be hydrogenated is liquid at normal temperature and under normal pressure. The use of a liquid as an electrolyte tends to enable electrochemical hydrogenation by an electrolytic synthesis cell without the need for a heating and pressurizing facility, as well as easy handling as a hydrogen carrier. From these viewpoints, the organic compound to be hydrogenated is more preferably benzene, toluene, xylene, diphenylethane, or quinoline, and most preferably toluene.

EXAMPLES

The following provides a description of specific examples and comparative examples. However, the present disclosure is not limited to the following examples.

[Measurement of thickness]

The thickness of the cathode diffusion layer (mm) was measured using a contact-type thickness gauge (manufactured by Toyo Seiki Seisaku-Sho, Ltd.).

[Measurement of basis weight]

The basis weight of the cathode diffusion layer ($g \cdot m^{-2}$) was determined by dividing the mass of a electrode cut out to $50 \times 50$ mm by the area thereof.

[Measurement of bulk density]

First, the dimensions of the cathode diffusion layer are measured using a caliper or the like, and the obtained dimensions are used to determine the bulk volume $V_{bulk}$ of the cathode diffusion layer. Next, the mass M of the cathode diffusion layer is measured using a precision balance. With the obtained mass M and bulk volume $V_{bulk}$, the bulk density $\rho bulk$ ($g \cdot cm^{-3}$) of the cathode diffusion layer can be determined using the following expression (Y).

$$\rho_{bulk} = M / V_{bulk} \qquad \ldots (Y)$$

[Measurement of real density]

The real density $\rho real$ ($g \cdot cm^{-3}$) of the cathode diffusion layer can be determined with the sink-float method using a mixed solution of n-heptane, carbon tetrachloride, and ethylene dibromide. Specifically, a cathode diffusion layer of an appropriate size is placed into a stoppered test tube first. Next, three solvents are appropriately mixed and added to the test tube, and the test tube is immersed in a thermostat bath at 30 °C. If the specimen comes up, then the low-density n-heptane is added. On the other hand, if the specimen sinks down, then the high-density ethylene dibromide is added. This operation is repeated until the specimen floats in the liquid. Finally, the density of the liquid is measured using a Gay-Lussac pycnometer.

[Calculation of porosity]

With the bulk density $\rho bulk$ and real density $\rho real$ determined as described above, the porosity $V_{f,pore}$ (%) can be determined using the following expression (X).

$$V_{f,pore} = ((1 / \rho_{bulk}) - (1 / \rho_{real})) / (1 / \rho_{bulk}) \times 100 \ (\%) \qquad (X)$$

[Structural analysis by X-ray CT]

The structural analysis by X-ray CT was performed on a carbon form with the thickness direction being the x-axis. Specifically, in order to facilitate X-ray imaging, electroless copper plating was first performed on each of the carbon foams of the Examples. Subsequently, a specimen (sample) was collected, and structural analysis was performed on the collected specimen using a high-resolution 3D X-ray microscope nano3DX (manufactured by Rigaku Corporation). The following describes the electroless plating conditions and the X-ray CT analysis conditions in detail.

By using the median filter, the obtained three-dimensional images were processed in neighboring 1 pixel using a filter size of a radius of 2 pixels, and were binarized using Otsu's algorithm.

Subsequently, Centerline Editor (Ver. 7) of Simpleware software manufactured by JSOL Corporation with default setting values was used to remove lines of 2.16 $\mu$m or less as noise, and then the number $N_b$ of the node portions and the number $N_1$ of the linear portions in a measurement field of view of 300 $\mu$m $\times$ 300 $\mu$m $\times$ 300 $\mu$m were determined.

Furthermore, taking the thickness direction of the carbon foam as X direction (x-axis), the direction perpendicular to the X direction as y direction (y-axis), and the direction perpendicular to the X direction and the y direction as z direction (z-axis), the vector of each linear portion in the measurement field of view was calculated, and the average value $\theta_{avex}$ (deg) of the orientation angle with respect to the x-axis, the average value $\theta_{avey}$ (deg) of the orientation angle with respect to the y-axis, and the average value $\theta_{avez}$ (deg) of the orientation angle with respect to the z-axis were calculated for each vector. In this case, the orientation angle was converted so as to be within 90 degrees.

[Electroless plating condition]

The sample was immersed in OPC Condiclean MA (manufactured by Okuno Chemical Industries Co., Ltd., diluted to 100 mL/L with distilled water) at 70 °C for 5 minutes, and then rinsed with distilled water for 1 minute. Subsequently, the sample was immersed in OPC Predip 49L (manufactured by Okuno Chemical Industries Co., Ltd., diluted to 10 mL/L with distilled water and added with 98 % sulfuric acid at 1.5 mL/L) at 70 °C for 2 minutes, and then rinsed with distilled water for 1 minute. Subsequently, the sample was immersed in a solution, which was obtained by mixing OPC Inducer 50 AM (manufactured by Okuno Chemical Industries Co., Ltd., diluted to 100 mL/L with distilled water) and OPC Inducer 50 CM (manufactured by Okuno Chemical Industries Co., Ltd., diluted to 100 mL/L with distilled water) at 1: 1, at 45 °C for 5 minutes, and then rinsed with distilled water for 1 minute. Subsequently, the sample was immersed in OPC-150 Crystal MU (manufactured by Okuno Chemical Industries Co., Ltd., diluted to 150 mL/L with distilled water) at room temperature for 5 minutes, and then rinsed with distilled water for 1 minute. Subsequently, the sample was immersed in OPC-BSM (manufactured by Okuno Chemical Industries Co., Ltd., diluted to 125 mL/L with distilled water) at room temperature for 5 minutes. Subsequently, the sample was immersed in a solution, which was obtained by mixing Chemical Copper 500A (manufactured by Okuno Chemical Industries Co., Ltd., diluted to 250 mL/L with distilled water) and Chemical Copper 500B (manufactured by Okuno Chemical Industries Co., Ltd., diluted to 250 mL/L with distilled water) at 1: 1, at room temperature for 10 minutes, and then rinsed with distilled water for 5 minutes. Subsequently, the sample was subjected to vacuum drying at 90 °C for 12 hours to dry the water.

[X-ray condition]

X-ray target: Cu
X-ray tube voltage: 40 kV
X-ray tube current: 30 mA

[Imaging condition]

Number of projections: 1500 images
Rotation angle: 180 °
Exposure time: 20 seconds/image
Number of pixels: 1648 $\times$ 1202 pixels
Pixel size: 0.54 $\mu$m/pixel
Observation area size: 624 $\mu$m $\times$ 624 $\mu$m $\times$ 600 $\mu$m

With the above structural analysis, the number $N_b$ of the node portions, the number $N_1$ of the linear portions, the average values (deg) of the orientation angles with respect to the three mutually perpendicular directions (x, y, z), and the density of the node portions (the number of the node portions/mm$^3$) were determined.

The results are listed in Table 1.

In Table 1, $\theta_c$ (deg) is the difference between the maximum value and the minimum value of $\theta_{avex}$, $\theta_{avey}$ and $\theta_{avez}$, and $\theta_d$ (deg) is a smaller value of the difference between $\theta_{avex}$ and $\theta_{avey}$ or $\theta_{avez}$.

[Measurement methods of average carbon frequency and average carbon area ratio]

By using the three-dimensional median filter, the three-dimensional image captured in [Structural analysis by X-ray CT] above was processed in neighboring 1 pixel using a filter size of a radius of 2 pixels, and was binarized using Otsu's algorithm. Furthermore, within the analysis region (624 $\mu$m $\times$ 624 $\mu$m) of the cross-sectional image of the carbon foam in the thickness direction (image of a cross-sectional image of the cross-section cut perpendicularly to the thickness direction of the carbon foam), the number of continuous carbon portions and the sum of the areas of continuous carbon portions within the analysis region were determined using the particle analysis function of the image processing software ImageJ. The carbon frequency per 1 $\mu$m $\times$ 1 $\mu$m and carbon area ratio were calculated by dividing these by the area of the analysis region, as expressed by the expression below. The same operation was repeated for 1152 cross-sectional images of the carbon foam in the thickness direction (obtained at 0.54 $\mu$m/pitch), and the average values of the measurements obtained for all regions were calculated to obtain the average carbon frequency and average carbon area ratio.

Note that calculation was performed under analysis conditions that included the area at the edge of the image. Furthermore, the average was calculated using cross-sectional images with a carbon area ratio of 0.01 or greater in the analysis region in order to exclude areas where no carbon was present as a sample.

Carbon frequency ($\mu$m$^{-2}$) = number of continuous carbon portions / area of analysis region Carbon area ratio = total area of continuous carbon portions / area of analysis region

[Image processing conditions]

Number of pixels: 1152 $\times$ 1202 pixels
Pixel size: 0.54 $\mu$m/pixel
Thickness direction: 1152 images (0.54 $\mu$m/pitch)
Software used: ImageJ 1.50i

[Measurement method of standard deviation of carbon frequency]

For the carbon frequencies of the carbon forms described above, the standard deviation of the carbon frequency obtained for each cross-sectional image in the thickness direction was determined. At this time, the calculation was performed using cross-sectional images with a carbon area ratio of 0.01 or greater in the analysis region in order to exclude areas where no carbon was present as a sample.

[Measurement method of standard deviation of carbon area ratio]

For the carbon area ratio of the carbon foam described above, the standard deviation of the carbon area ratio obtained for each cross-sectional image in the thickness direction was determined. At this time, the calculation was performed using cross-sectional images with a carbon area ratio of 0.01 or greater in the analysis region in order to exclude areas where no carbon was present as a sample.

[Measurement method of average fiber diameter]

The average fiber diameter $d_{ave}$ ($\mu$m) of the fibrous carbon constituting the cathode diffusion layer is determined by image analysis of a scanning electron microscope image. Specifically, the cathode electrode is observed at a magnification of 10,000 using a scanning electron microscope. Twenty locations are randomly selected on the obtained observation image, and the thickness of the fibrous carbon at these locations is measured. Assuming that the cross section is in a circular shape, the average thickness is taken as the average fiber diameter $d_{ave}$.

[Carbon content]

The carbon content of the cathode diffusion layer was determined by X-ray fluorescence analysis. A sample cut into 35 mm squares was set in a sample holder for an X-ray irradiation diameter of 30 mmφ. Subsequently, measurement was performed using an X-ray fluorescence analyzer ZSX-100E (wavelength dispersion type, Rh tubular lamp) manufactured by Rigaku Corporation. Semi-quantitative analysis was performed on all elements in the X-ray irradiation diameter of 30 mmφ to determine the carbon content (wt%) in all elements.

[Surface oxygen concentration]

The elemental composition of the surface of the cathode diffusion layer was measured using an X-ray photoelectron spectrometer (VersaProbe II, manufactured by ULVAC-Phi Inc.). The relative elemental concentrations atomic% (hereinafter referred to as "at%") of the C1s peak near 285 eV, the N1s peak near 400 eV, the O1s peak near 533 eV, and the N1s peak near 400 eV as peaks of major elements were calculated and expressed in percentages. Other elemental peaks with large detection intensities, if any, were also included and calculated in a percentage.

[Evaluation of crystallite size]

The crystallite size Lc (nm) of the cathode diffusion layers of Examples 1 to 13 and Comparative Examples 1 to 3 was evaluated by the diffraction of the (002) plane. The sample was ground in a mortar. Subsequently, the ground sample was subjected to wide-angle X-ray measurement using a desktop X-ray diffractometer D2 PHASER (manufactured by Bruker Corporation). The specific measurement conditions were as follows.

[Measurement condition]

Radiation source: Cu Kα
Tube current: 30 mA
Tube voltage: 40 kV
Slit: 1 mm
Sample rotational speed: 10 rotations/minute
Measurement time of one step: 0.3 seconds
Start angle (2θ): 5.00 °
Measurement step (2θ): 0.01 °
End angle (2θ): 90.00 °

After the measurement, the obtained data were analyzed to calculate the crystallite size Lc (nm). The crystallite size Lc can be determined by substituting the half-value width β of the diffraction peak of the (002) plane appearing near 2θ = 25 degrees and the angle λ of the peak maximum value into the following Scherrer equation (c). In general, a higher carbonization temperature leads to higher crystallinity and a larger Lc value.

$$Lc = (K\lambda) / \beta cos\theta \qquad\qquad (c)$$

where K represents the form factor, and λ represents the wavelength of the radiation source. Because the form factor is (002) plane diffraction, 0.90 is substituted. Since CuKα is used as the radiation source in this case, 1.541 was substituted for calculation.

When the heat treatment is performed at a high temperature of 2000 °C, the crystallinity is higher and the Lc is larger than that of the case of 1100 °C.

[Taber bending stiffness]

The Taber bending stiffness (gf·cm) of the cathode diffusion layer was determined according to JIS P 8125-2000 using a Taber stiffness tester No. 2048-D manufactured by Kumagai Riki Kogyo Co., Ltd. A sample cut into a strip with a width of 38 mm was held so that the free length was 60 mm. The bending stiffness was determined from the average value of the load when the sample was bent to $\pm 15\,°$.

[Equivalent mass]

Approximately 0.02 to 0.10 g of an electrolyte membrane was immersed in 50 mL of a saturated NaCl solution (0.26 g/mL) at 25 °C and left for 30 minutes under stirring, and then neutralized titration was performed using a 0.01 N sodium hydroxide solution (manufactured by Wako Pure Chemical Industries, Ltd., Reagent Special Grade) by using phenolphthalein (manufactured by Wako Pure Chemical Industries, Ltd., Reagent Grade) as an indicator. After neutralization, the resulting Na-type ion exchange membrane was rinsed with deionized water, vacuum dried, and weighed. The equivalent mass EW (g/equivalent) was obtained from the following expression, where M (mmol) was the equivalent of sodium hydroxide required for neutralization, and W (mg) was the mass of the Na-type ion exchange membrane.

$$\text{Equivalent mass EW} = (W\,/\,M) - 22$$

After the above operation was repeated five times, the three values excluding the maximum and minimum of the five calculated EW values were averaged together to obtain the measurement result.

[Thickness after stretching]

A stretched electrolyte membranes was placed in a thermostatic chamber at 23 °C and a relative humidity of 65% for 12 hours or longer, and then the post-stretch thickness ($\mu$m) was measured using a contact-type thickness meter (manufactured by Toyo Seiki Seisaku-Sho, Ltd.).

[Craze area ratio]

The craze area ratio was determined from the transmittance mapping of visible light measured using an optical microscope equipped with an automatic stage capable of moving in an arbitrary X-axis direction and in the Y-axis direction perpendicular to the X-axis and a visible light spectrophotometer "uSight-2000" (product name, manufactured by TechnoSpex). The transmittance of visible light was mapped over a range with a vertical length of 75 mm $\times$ a width of 50 mm of the stretched film while a light focused at a diameter of 1 $\mu$m was moved with a step interval of 1 $\mu$m. The wavelength range of visible light to be measured was 450 to 700 nm. The ratio of the areas of regions with transmittance of 10% or less to the total area mapped was defined as the craze area ratio (%).

[Flatness]

The flatness of an electrolyte membrane was evaluated by the ratio of the length along the membrane plane to the projected dimension of the membrane. The length along the membrane plane was determined from the height-position profile of the membrane plane measured using a measuring microscope. Specifically, the height of the membrane plane of a membrane cut into approximately 140 mm squares was measured at 25 points at 5 mm intervals in the x-axis direction. The height-position profile of the membrane plane was approximated by the Spline function, the length along the membrane plane was obtained by numerical calculations, and the flatness index was calculated by the following formula and evaluated according to the following criteria.

Flatness index = length along membrane plane / projected dimension of membrane

A: Less than 1.05
B: 1.05 or more and less than 1.1
C: 1.1 or more and less than 1.2
D: 1.2 or more

[Ion cluster diameter]

The ion cluster diameter (nm) was measured by small-angle X-ray scattering (SAXS). An electrolyte membrane was immersed in water at 25 °C for 24 hours. Point-focus X-ray were incident from the direction of the membrane plane and from the direction perpendicular to the membrane plane while the membrane was immersed in water to detect transmitted scattered light. In measurements, the small-angle area was measured with a sample-to-detector distance of 841 mm using a detector "PILATUS 100K" (manufactured by Rigaku Corporation), while the wide-angle area was measured with a sample-to-detector distance of 75 mm using an imaging plate for the detector. The scattering data at scattering angles in the range of 0.1 ° < scattering angle ($2\theta$) < 30 ° were obtained by combining both profiles.

Measurements were made with seven samples stacked one other, and exposure time was 15 minutes for both small-angle and wide-angle area measurements. When data were obtained with a two-dimensional detector, the data were converted to one-dimensional data using a reasonable method such as circular averaging. Correction of obtained SAXS profiles were made, such as corrections derived from the detector, e.g., dark current correction of the detector, and corrections for scattering by materials other than the sample (empty cell scattering correction). If the effect of the X-ray beam shape on the SAXS profile (smear effect) was significant, a correction for the X-ray beam shape (desmear) was also made. The ion cluster diameter was determined for the one-dimensional SAXS profile obtained in this way according to the method described in Yasuhiro Hashimoto, Naoki Sakamoto, and Hideki Iijima, KOBUNSHU RONBUNSHU, vol. 63, No. 3 pp. 166, 2006. Specifically, assuming that the ion cluster structure is represented by a core-shell type rigid sphere with a particle size distribution, the theoretical scattering formula based on this model was used to fit the SAXS profile in the scattering angle region in which the scattering originating from ion clusters of the observed SAXS profile was dominant to determine the average cluster diameter (ion cluster diameter) and ion cluster number density. In this model, it was assumed that the core portion corresponds to the ion cluster and the diameter of the core is the ion cluster diameter. It was assumed that the shell layer is virtual and the electron density of the shell layer is the same as that of the matrix portion. In addition, the shell layer thickness was assumed to be 0.25 nm. The theoretical scattering expressions of the model used for fitting are shown in Equation (A) below. In addition, the fitting range was assumed to be 1.4 < $2\theta$ < 6.7 °.

[Math 2]

$$I_{HS}(q) = CNS(q, a_2, \eta) \int_0^\infty P(a) \left[ V(a) \Phi(qa) \right]^2 da + I_b(q)$$

where

$$q = 4\pi \sin\theta / \lambda$$

$$S(q, a_2, \eta) = \frac{1}{1 + 24\eta \left[ G(A) / A \right]}$$

$$G(A) = \frac{\alpha}{A^2}(\sin A - A\cos A) + \frac{\beta}{A^3}[2A\sin A + (2 - A^2)\cos A - 2]$$
$$+ \frac{\gamma}{A^5}(-A^4\cos A + 4[(3A^2 - 6)\cos A + (A^3 - 6A)\sin A + 6])$$

$$\alpha = (1 + 2\eta)^2 / (1 - \eta)^4$$

$$\beta = -6\eta(1 + \eta/2)^2 / (1 - \eta)^4$$

$$\gamma = 1/2\eta(1 + 2\eta)^2 / (1 - \eta)^4$$

$$A = 2qa_2$$

$$a_2 = a_0 + t$$

$$V(a) = \frac{4}{3}\pi a^3$$

$$\Phi(qa) = \frac{3}{(qa)^3}[\sin(qa) - (qa)\cos(qa)]$$

$$P(a) = \frac{p(a)/V(a)}{\int p(a)/V(a)da}$$

$$p(a) = \frac{M^M}{\Gamma(M)a_0^{M}} a^{M-1} \exp(-\frac{M}{a_0}a)$$

$$M = \left(\frac{\sigma}{a_0}\right)^{-2}$$

In the above expressions, C is the apparatus constant, N is the cluster number density, $\eta$ is the volume fraction of the core, i.e., when the ion cluster portion and the hypothetical shell surrounding it are assumed to be a rigid sphere, $\theta$ is the Bragg angle, $\lambda$ is the wavelength of X-ray used, t is the shell layer thickness, $a_0$ is the average ion cluster radius, $\Gamma(x)$ is the gamma function, $\sigma$ is the standard deviation of the ion cluster radius (core radius). P(a) represents the distribution function of the core radius a, where the volume distribution of a follows a Gaussian distribution p(a). $I_{b(q)}$ represents background scattering, including excess water-derived scattering and thermal diffuse scattering at the time of measurement, and was assumed to be a constant here. In the fitting, N, $\eta$, $a_0$, $\sigma$, and $I_{b(q)}$ among the above parameters were assumed to be variable parameters. In this specification, ion cluster diameter means the average diameter of ion clusters ($2a_0$).

[Orientation parameter]

The in-membrane plane orientation parameter and the out-of-membrane plane orientation parameter of an electrolyte membrane were obtained by approximating the azimuthal intensity distribution $I(\phi)$ of the peaks derived from an ion cluster in two-dimensional small-angle scattering measured according to the method described above with the orientation function represented by the following expression.

[Math 3]

$$I(\emptyset) = Q\frac{1-q^2}{1+q^2-2q\cos\emptyset}$$

where Q is a constant, $\phi$ is the azimuth, and q is the orientation parameter.

When the in-membrane plane orientation parameters were determined, $\phi = 0$ was used for the X direction. Thus, q is 1 when an ion cluster is perfectly oriented in the X direction, whereas q is -1 when it is perfectly oriented in the Y direction. On the other hand, q is 0 when the orientation is random.

When the out-of-membrane plane orientation parameters were determined, $\phi = 0$ was used for the normal direction of the membrane. Thus, q is 1 when an ion cluster is perfectly oriented in the normal direction, whereas q is -1 when it is perfectly oriented in the membrane plane direction. On the other hand, q is 0 when the orientation is random.

[Crystal long period]

The crystal long period (nm) was determined using the Bragg formula from the position of the peak derived from the periodicity of the electron density difference between crystalline and amorphous structures, which occurred in the scattering vector range of 0.1 to 1.0 $nm^{-1}$, in the one-dimensional SAXS profile obtained according to the method described above.

The peak intensity, on the other hand, was defined as the ratio of the difference between the peak top intensity and the baseline intensity to the baseline intensity. Those from which peaks could not be detected were marked with "-" as no difference in intensity could be detected.

[Dimensional change ratio caused by immersion in 2M sulfuric acid aqueous solution]

An electrolyte membrane was dried under reduced pressure at 50 °C or lower for 2 hours to adjust the water content ratio to 1 mass% or less, and then cut into a piece of 7 cm squares to prepare a test electrolyte membrane. The test electrolyte membrane was immersed in a 2M sulfuric acid aqueous solution at 25 °C for 30 minutes. The dimensions of the test electrolyte membrane in the X direction and the Y direction after immersion were measured using a measuring microscope "D2XY-KSH" (product name, manufactured by NIHON KOKI SEISAKUSHO CO., LTD., Ltd.), and the dimensional change ratios were calculated using the following formula. Note that the X direction is an arbitrarily selected direction on the membrane plane, and the Y direction refers to the direction perpendicular to the X direction on the membrane plane.

Dimensional change ratio (%) = {(dimension in specified direction after immersion) / (dimension in the specified direction before immersion)} $\times$ 100

[Dimensional change ratio caused by immersion in distilled water]

An electrolyte membrane was dried under reduced pressure at 50 °C or lower for 2 hours to adjust the water content ratio to 1% or less, and then cut into a piece of 7 cm squares to prepare a test electrolyte membrane. The test electrolyte membrane was immersed in distilled water at 25 °C for 30 minutes. The dimensions of the test electrolyte membrane in the X direction, the Y direction, and the Z direction after immersion were measured using a measuring microscope "D2XY-KSH" (product name, manufactured by NIHON KOKI SEISAKUSHO CO., LTD., Ltd.), and the dimensional change ratios were calculated using the following formula. Note that the X direction is an arbitrarily selected direction on the membrane plane, and the Y direction refers to the direction perpendicular to the X direction on the membrane plane. The Z direction refers to the direction perpendicular to the X direction and the Y direction.

Dimensional change ratio (%) = {(dimension in specified direction after immersion) / (dimension in the specified direction before immersion)} $\times$ 100

[Puncture strength]

The puncture strength was measured using a puncture strength tester "Puncture Strength Tester SPK-NDA1-A" (product name, manufactured by Kato Tech Co., Ltd.) for an electrolyte membrane that had been left at room temperature for 12 hours or longer. The electrolyte membrane was sandwiched between two metal plates with a circular hole with a diameter of 10 mm and was punctured with a needle with a radius of curvature of 0.5 mm at a speed of 2 mm/sec. The maximum load (kgf) of the load-displacement curve was divided by the thickness of the electrolyte membrane ($\mu$m) to obtain the puncture strength (kgf/$\mu$m).

[Measurement of YI value]

The YI value of an electrolyte membrane was measured by transmission using a D65 light source with "Spectrophotometer: SE600" manufactured by NIPPON DENSHOKU INDUSTRIES Co., Ltd. The electrolyte membrane used had a thickness of 75 $\mu$m and was cut into a piece of 5 cm squares.

[Perfluorocarbon polymer]

In the present examples, perfluorocarbon polymers with the following two structures were used.

Perfluorocarbon polymer containing the structure represented by the following formula (P1)

$$-[CF_2CF_2]-[CF_2-CF(-O-CF_2CF_2-SO_3H)]- \qquad (P1)$$

Perfluorocarbon polymer containing the structure represented by the following formula (P2)

$$-[CF_2CF_2]-[CF_2-CF(-O-CF_2CFCF_3-O-CF_2CF_2-SO_3H)]- \qquad (P2)$$

(Example 1)

A carbon foam made by carbonizing a melamine resin foam BASOTECT G+ manufactured by BASF was used for the cathode diffusion layer. Carbon fiber nonwoven fabric with a thickness of 6 mm was placed on the melamine resin foam (dimensions: 90 mm $\times$ 120 mm $\times$ 25 mm) and a graphite plate with a thickness of 6 mm was placed thereon. Then, a compressive load of 280 Pa was applied, and the melamine resin foam was introduced into a heat treatment furnace with the compressive load applied thereon. Subsequently, nitrogen gas was supplied into the furnace at a flow rate of 2.5 L/min, and the temperature in the furnace was raised to 1100 °C at a heating rate of 5 ° C/min. This state was kept for 1 hour to carbonize the melamine resin foam. Subsequently, the temperature in the furnace was cooled to room temperature, and the carbonized melamine resin foam was taken out frofhe furnace. The obtained cathode diffusion layer (carbon foam) had continuous voids, and had a structure with linear portions with a fiber diameter of approximately 2 $\mu$m and node portions where the linear portions were joined together.

As the electrolyte membrane, a membrane that had a thickness of 75 $\mu$m and was made of the perfluorocarbon polymer (polymer structure: the formula (P1), equivalent mass EW = 750 g/eq), immersed in distilled water at 70 °C for 30 minutes, washed four times, and dried at 100 °C for 20 minutes was used without stretching.

A toluene electrohydrogenation test was performed using an electrolytic cell manufactured by MICLAB with an electrode area of 2 $\times$ 2 cm. A cathode plate and an anode plate were provided with parallel flow channels for the distribution of sulfuric acid and toluene, respectively, and their surfaces were gold plated to inhibit corrosion due to electrolysis. In addition, the structure was made to permit the insertion of a bar heater to control the cell temperature. The cell was assembled by stacking the cell components in the following order from the cathode side and then fastening the stack with bolts with the specified torque.

Cathode plate / carbon foam / cathode catalyst layer-membrane joined body / anode catalyst electrode / anode diffusion layer / anode plate

Commercially available oxygen-evolving electrodes (iridium oxide-based catalyst-coated titanium electrode) and titanium fiber sintered body 2GDL5-030 (thickness: 300 $\mu$m) manufactured by Bekaert Toko Metal Fiber Co., Ltd. were used for the anode catalyst electrode and the anode diffusion layer, respectively. A gasket used between the cathode plate and the membrane was adjusted so that the thickness of the carbon foam was 250 $\mu$m when incorporated into the cell.

The cathode catalyst layer-membrane joined body was produced using the decal method, in which the cathode catalyst layer that was prepared by spray coating and membrane were joined by hot pressing. First, 0.50 g of a platinum-ruthenium-support carbon catalyst particles (manufactured by Tanaka Precious Metals Co., Ltd., standard catalyst for solid polymer electrolyte fuel cells, standard product resistant to carbon monoxide poisoning TEC 61E54, Pt and Ru content: 54 mass% (Pt:Ru = 1:1.5) support catalyst (carrier: Ketjen black EC), (hereafter referred to as "Pt/Ru-C catalyst"), 2.00 g of distilled water, and 5.00 g of a solution of Nafion 117 manufactured by Sigma-Aldrich (concentration: 5 wt%) were placed in a pot made of zirconia and mixed in a planetary ball mill to prepare a cathode catalyst ink. Next, the cathode catalyst layer was prepared by applying the cathode catalyst ink to a Teflon ® sheet so that a basis weight was 0.5 mg·cm$^{-2}$ using a compact spray coating apparatus Model AV-8 manufactured by ACing Technologies, Co., Ltd. Finally, the membrane and the cathode catalyst layer were hot-pressed at 140 °C for 2 minutes, and the Teflon® sheet, which was the base material, was peeled off to fabricate the cathode catalyst layer-membrane joined body.

[Electrolysis test]

The electrolytic cell assembled according to the procedure described above was tested according to the following procedure. First, a 1 M $H_2SO_4$ and 100% toluene were distributed to the anode and cathode, respectively, both at a flow rate of 2 mlmin$^{-1}$. Next, the cell was heated to 60 °C and then aged by energizing it for 2 hrs with a constant current with a current density of 0.1 Acm$^{-2}$. The current density was then increased to 0.5 Acm$^{-2}$ in an increment of 0.1 Acm$^{-2}$.

The ratio of the thermoneutral voltage of electrohydrogenation of toluene, 1.138 V, to the cell voltage at a current density of 0.5 Acm$^{-2}$ was determined as the voltage efficiency (%).

On the other hand, the current efficiency (%) was determined by quantifying the concentration of methylcyclohexane in toluene at the cathode after electrolysis at a given current density for a certain time using gas chromatography.

In addition, the product of the above voltage efficiency (%) and the above current efficiency (%) was calculated as the energy efficiency (%).

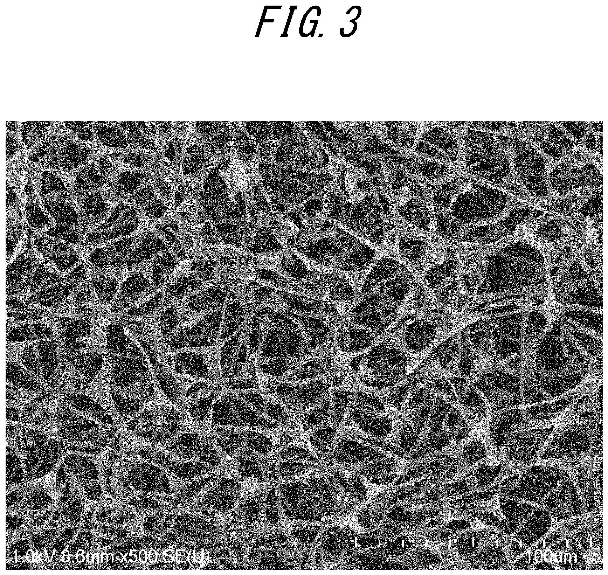

FIG. 3 is an SEM image of the carbon foam used in Example 1.

The conditions for this example are as listed in Tables 1 to 3.

(Example 2)

A carbon foam was prepared in the same manner as Example 1, except that the thickness of the raw material melamine resin foam was changed to 4 mm and the compressive load applied to the melamine foam in carbonization was changed to 70 Pa. The obtained carbon foam had continuous voids, and had a structure with linear portions with a fiber diameter of approximately 2 $\mu$m and node portions where the linear portions were joined together. In addition, the method of producing the membrane and electrolytic test method was also the same as in Example 1.

The conditions for this example are as listed in Tables 1 to 3.

(Example 3)

A carbon foam was prepared in the same manner as Example 1, except that the thickness of the raw material melamine resin foam was changed to 30 mm and the compressive load applied to the melamine foam in carbonization was changed to 630 Pa. The obtained carbon foam had continuous voids, and had a structure with linear portions with a fiber diameter of approximately 2 $\mu$m and node portions where the linear portions were joined together. In addition, the method of producing the membrane and electrolytic test method was also the same as in Example 1.

The conditions for this example are as listed in Tables 1 to 3.

(Example 4)

A carbon foam was prepared in the same manner as Example 1, except that the carbonization temperature was changed to 2000 °C. The obtained carbon foam had continuous voids, and had a structure with linear portions with a fiber diameter of approximately 2 $\mu$m and node portions where the linear portions were joined together. In addition, the method of producing the membrane and electrolytic test method was also the same as in Example 1.

The conditions for this example are as listed in Tables 1 to 3.

(Example 5)

A carbon foam was prepared in the same manner as Example 1, except that the thickness of the raw material melamine resin foam was changed to 3 mm, the compressive load applied to the melamine foam in carbonization was changed to 70 Pa, and the carbonization temperature was changed to 2000 °C. The obtained carbon foam had continuous voids, and had a structure with linear portions with a fiber diameter of approximately 2 $\mu$m and node portions where the linear portions were joined together. In addition, the method of producing the membrane and electrolytic test method was also the same as in Example 1.

The conditions for this example are as listed in Tables 1 to 3.

(Example 6)

A carbon foam was prepared in the same manner as Example 1, except that the thickness of the raw material melamine resin foam was changed to 2 mm, the compressive load applied to the melamine foam in carbonization was changed to 18 Pa, and the carbonization temperature was changed to 1500 °C. The obtained carbon foam had continuous voids, and had a structure with linear portions with a fiber diameter of approximately 2 $\mu$m and node portions where the linear portions were joined together. In addition, the method of producing the membrane and electrolytic test method was also the same as in Example 1.

The conditions for this example are as listed in Tables 1 to 3.

(Example 7)

For a raw material melamine resin foam (dimensions: 90 mm × 120 mm × 40 mm), a sample was placed on a 250 mm square graphite plate, a SUS plate in a size of 150 mm × 20 mm with a thickness of 0.5 mm was placed next to the sample as a spacer, and another graphite plate was placed thereon so that the sample and the spacer were sandwiched between the graphite plates. The sample and the spacer sandwiched between the graphite plates were introduced into a vacuum press machine (KVHC-II) manufactured by KITAGAWA SEIKI CO., LTD, and pressed at a set pressure of 2.0 MPa while reducing the pressure with a vacuum pump. The temperature was raised to 360 °C at a heating rate of 5 °C/min as the depressurization continued, and the temperature was kept at 360 °C for 10 minutes and then cooled down. After taking out the sample, the sample was also placed on a graphite plate as in Example 6, applied with a compressive load of 18 Pa, and introduced into a heat treatment furnace with the compressive load applied thereon, and a heat treatment was performed at 1500 °C. A carbon foam of Example 7 was prepared in this way. The obtained carbon foam had continuous voids, and had a structure with linear portions with a fiber diameter of approximately 2 μm and node portions where the linear portions were joined together. The membrane preparation method and electrolytic test method were the same as in Example 1.
The conditions for this example are as listed in Tables 1 to 3.

(Example 8)

A raw material membrane that had a thickness of 300 μm and was made of the perfluorocarbon polymer (polymer structure: the formula (P1), equivalent mass EW = 950 g/eq) was immersed in distilled water at 70 °C for 30 minutes, and rinsed. This operation was repeated four times. The membrane was dried at 100 °C for 20 minutes, and then stretched by simultaneous biaxial stretching using a batch-type biaxial stretching machine "IMC-1AA6" (product name, manufactured by Imoto machinery Co., LTD.). A raw material membrane cut to 92.5 mm in both the X direction and the Y direction perpendicular to each other was held in the stretching machine so that the chuck spacing in the X direction and the Y direction was 72.5 mm. After 3 minutes had elapsed after the temperature in the heating chamber of the stretching machine reached 140 °C, simultaneous biaxial stretching was started at a stretching speed of 100 mm/min. When the chuck spacing in the X direction and the Y direction reached 145 mm, stretching was stopped and the heating chamber was immediately opened and cooling was started while the membrane was held in the chuck. At the same time, the chuck spacing was narrowed by 0.7 mm so that the relaxation rate in the X direction and the Y direction was 0.5%. When the membrane cooled to room temperature, it was removed from the chuck to obtain a biaxially stretched electrolyte membrane with a stretching ratio of 2.0 in the X direction and the Y direction. The method of producing the carbon foam and electrolytic test method were also the same as in Example 1.
The conditions for this example are as listed in Tables 1 to 3.

(Example 9)

A raw material membrane having a thickness of 470 μm and was made of the perfluorocarbon polymer (polymer structure: the formula (P2), equivalent mass EW = 1100 g/eq) was immersed in distilled water at 70 °C for 30 minutes and rinsed. This operation was repeated four times, and the membrane was dried at 100 °C for 20 minutes, and biaxially stretched. A raw material membrane cut to 78 mm in both the X direction and the Y direction perpendicular to each other was held in the stretching machine so that the chuck spacing in the X direction and the Y direction was 58 mm. After 3 minutes had elapsed after the temperature in the heating chamber of the stretching machine reached 100 °C, simultaneous biaxial stretching was started at a stretching speed of 100 mm/min. When the chuck spacing in the X direction and the Y direction reached 145 mm, stretching was stopped and the heating chamber was immediately opened and cooling was started while the membrane was held in the chuck. At the same time, the chuck spacing was narrowed by 0.7 mm so that the relaxation rate in the X direction and the Y direction was 0.5%. After the membrane cooled to room temperature, it was removed from the chuck to obtain a biaxially stretched electrolyte membrane with a stretching ratio of 2.5 in the X direction and the Y direction. The method of producing the carbon foam and electrolytic test method were also the same as in Example 1.
The conditions for this example are as listed in Tables 1 to 3.

(Example 10)

A raw material membrane having a thickness of 630 μm and was made of the perfluorocarbon polymer (polymer structure: the formula (P1), equivalent mass EW = 950 g/eq) was immersed in distilled water at 70 °C for 30 minutes and rinsed. This operation was repeated four times, and the membrane was dried at 100 °C for 20 minutes, and biaxially stretched. A raw material membrane cut to 70 mm in both the X direction and the Y direction perpendicular to each other was held in the stretching machine so that the chuck spacing in the X direction and the Y direction was 50 mm. After 3 minutes had elapsed after the temperature in the heating chamber of the stretching machine reached 140 °C, simultaneous biaxial stretching was started at a stretching speed of 100 mm/min. When the chuck spacing in the X direction and the Y direction reached 145 mm, stretching was stopped and the heating chamber was immediately opened and cooling was started while the membrane was held in the chuck. At the same time, the chuck spacing was narrowed by 1.4 mm so that the relaxation rate in the X direction and the Y direction was 1.0%. After the membrane cooled to room temperature, the membrane was again heated at 140 °C for 5 min while the same chuck interval was maintained. After the membrane cooled to room temperature, it was removed from the chuck to obtain a heat-set biaxially stretched electrolyte membrane with a stretching ratio of 2.9 in the X direction and the Y direction. The method of producing the carbon foam and electrolytic test method were also the same as in Example 1.

The conditions for this example are as listed in Tables 1 to 3.


(Example 11)

A carbon foam was prepared in the same manner as Example 1, except that the thickness of the raw material melamine resin foam was changed to 2 mm and no load was applied to the melamine foam in carbonization. The obtained carbon foam had continuous voids, and had a structure with linear portions with a fiber diameter of approximately 2 $\mu$m and node portions where the linear portions were joined together. In addition, the method of producing the membrane and electrolytic test method was also the same as in Example 1. Although the bulk density of the resulting carbon foam was as small as 0.006 gcm$^{-3}$, sufficient electrical contact and conductivity were obtained by compressing the carbon foam having a thickness of 1000 $\mu$m to 250 $\mu$m and incorporating it into the cell.

The conditions for this example are as listed in Tables 1 to 3.


(Example 12)

A carbon foam was prepared in the same manner as Example 1, except that the thickness of the raw material melamine resin foam was changed to 2 mm, no load was applied to the melamine foam in carbonization, and the carbonization temperature was changed to 2000 °C. The obtained carbon foam had continuous voids, and had a structure with linear portions with a fiber diameter of approximately 2 $\mu$m and node portions where the linear portions were joined together. In addition, the method of producing the membrane and electrolytic test method was also the same as in Example 1.

The conditions for this example are as listed in Tables 1 to 3.


(Example 13)

Carbon fiber paper (SIGRACET GDL39AA) manufactured by SGL CARBON was used for the cathode diffusion layer. On the other hand, the same biaxially stretched membrane as in Example 8 was used for the membrane. The other electrolytic test method was the same as in Example 1.

The conditions for this example are as listed in Tables 1 to 3.


(Example 14)

Carbon fiber paper (SIGRACET GDL39AA) manufactured by SGL CARBON was used for the cathode diffusion layer. On the other hand, the membrane was produced as follows. A raw material membrane that had a thickness of 300 $\mu$m and was made of the perfluorocarbon polymer (polymer structure: the formula (P1), equivalent mass EW = 950 g/eq) was immersed in distilled water at 70 °C for 30 minutes and rinsed. This operation was repeated twice. The membrane was dried at 100 °C for 20 minutes, and then stretched by simultaneous biaxial stretching using a batch-type biaxial stretching machine "IMC-1AA6" (product name, manufactured by Imoto machinery Co., LTD.). A raw material membrane cut to 92.5 mm in both the X direction and the Y direction perpendicular to each other was held in the stretching machine so that the chuck spacing in the X direction and the Y direction was 72.5 mm. After 3 minutes had elapsed after the temperature in the heating chamber of the stretching machine reached 140 °C, simultaneous biaxial stretching was started at a stretching speed of 25 mm/min. When the chuck spacing in the X direction and the Y direction reached 145 mm, stretching was stopped and the heating chamber was immediately opened and cooling was started while the membrane was held in the chuck. At the same time, the chuck spacing was narrowed by 0.7 mm so that the relaxation rate in the X direction and the Y direction was 0.5%. When the membrane cooled to room temperature, it was removed from the chuck to obtain a biaxially stretched electrolyte membrane with a stretching ratio of 2.0 in the X direction and the Y direction.

The other electrolytic test method was the same as in Example 1.

The conditions for this example are as listed in Tables 1 to 3.

(Example 15)

Carbon fiber paper (SIGRACET GDL39AA) manufactured by SGL CARBON was used for the cathode diffusion layer. On the other hand, the membrane was produced as follows. Without rinsing with distilled water, a raw material membrane having a thickness of 300 $\mu$m and was made of the perfluorocarbon polymer (polymer structure: the formula (P1), equivalent mass EW = 950 g/eq) was stretched by simultaneous biaxial stretching using a batch-type biaxial stretching machine "IMC-1AA6" (product name, manufactured by Imoto machinery Co., LTD.). At that time, the heating chamber during stretching was evacuated at 50 L/sec after it was sealed. A raw material membrane cut to 92.5 mm in both the X direction and the Y direction perpendicular to each other was held in the stretching machine so that the chuck spacing in the X direction and the Y direction was 72.5 mm. After 3 minutes had elapsed after the temperature in the heating chamber of the stretching machine reached 140 °C, simultaneous biaxial stretching was started at a stretching speed of 100 mm/min. When the chuck spacing in the X direction and the Y direction reached 145 mm, stretching was stopped and the heating chamber was immediately opened and cooling was started while the membrane was held in the chuck. At the same time, the chuck spacing was narrowed by 0.7 mm so that the relaxation rate in the X direction and the Y direction was 0.5%. When the membrane cooled to room temperature, it was removed from the chuck to obtain a biaxially stretched electrolyte membrane with a stretching ratio of 2.0 in the X direction and the Y direction.
The other electrolytic test method was the same as in Example 1.
The conditions for this example are as listed in Tables 1 to 3.

(Comparative Example 1)

Carbon fiber paper (SIGRACET GDL39AA) manufactured by SGL CARBON was used for the cathode diffusion layer. Other membrane preparation method and electrolytic test method were the same as in Example 1.
The conditions for this example are as listed in Tables 1 to 3.

(Comparative Example 2)

Carbon fiber nonwoven fabric (SIGRACELL GFD4.6EA) manufactured by SGL CARBON was used for the cathode diffusion layer. By placing a Teflon® plate between the cathode plate and the membrane, the thickness of the carbon fiber nonwoven fabric was adjusted to be 3 mm when incorporated into the cell. Other membrane preparation method and electrolytic test method were the same as in Example 1. For the carbon fiber nonwoven fabric, which was significantly thicker than carbon foams or carbon fiber paper, the Taber bending stiffness could not be measured correctly.
The conditions for this example are as listed in Tables 1 to 3.

(Comparative Example 3)

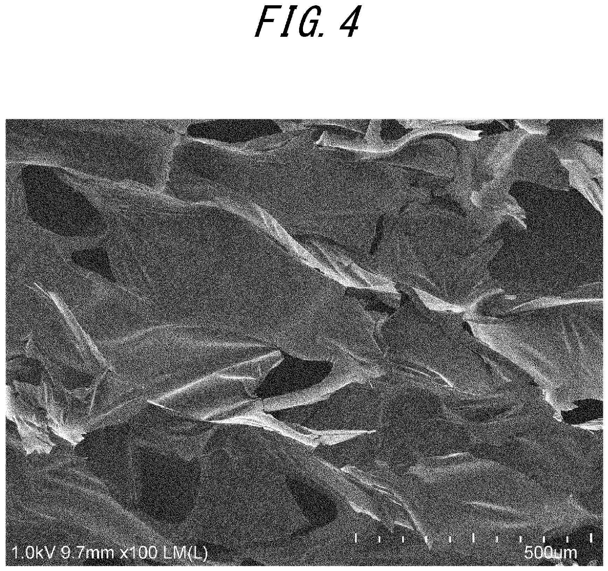

A carbon foam obtained by carbonizing a polyimide foam SOLIMIDE manufactured by Boyd Corp. at 1100 °C as in Example 1 was used for the cathode diffusion layer. As can be seen from the scanning electron microscope image illustrated in FIG. 4, the carbon foam did not have a structure consisting of linear portions and node portions, but rather a so-called card house structure consisting of thin wavy carbon films overlapping one another. Other membrane preparation method and electrolytic test method were the same as in Example 1.
FIG. 4 is an SEM image of the carbon foam used in Comparative Example 3.
The conditions for this example are as listed in Tables 1 to 3.

(Comparative Example 4)

A melamine resin foam BASOTECT G+ manufactured by BASF was immersed in a 2M sulfuric acid at room temperature and allowed to stand for one week. The foam was then rinsed with distilled water and it was confirmed that the rinse solution was neutral. Thereafter, a carbon foam was prepared as in Example 1. The resulting carbon foam had continuous voids, had a structure with linear portions with a fiber diameter of approximately 0.4 $\mu$m and node portions where the linear portions were joined together, but the strength was too small to be incorporated into an electrolytic cell.
The conditions for this example are as listed in Tables 1 to 3.

(Comparative Example 5)

Carbon fiber paper (SIGRACET GDL39AA) manufactured by SGL CARBON was used for the cathode diffusion layer. On the other hand, the membrane was produced as follows. Without rising with distilled water, a raw material membrane that had a thickness of 300 $\mu$m and was made of the perfluorocarbon polymer (polymer structure: the formula (P1), equivalent mass EW = 950 g/eq) was stretched by simultaneous biaxial stretching using a batch-type biaxial stretching machine "IMC-1AA6" (product name, manufactured by Imoto machinery Co., LTD.). A raw material membrane cut to 92.5 mm in both the X direction and the Y direction perpendicular to each other was held in the stretching machine so that the chuck spacing in the X direction and the Y direction was 72.5 mm. After 3 minutes had elapsed after the temperature in the heating chamber of the stretching machine reached 140 °C, simultaneous biaxial stretching was started at a stretching speed of 100 mm/min. When the chuck spacing in the X direction and the Y direction reached 145 mm, stretching was stopped and the heating chamber was immediately opened and cooling was started while the membrane was held in the chuck. At the same time, the chuck spacing was narrowed by 0.7 mm so that the relaxation rate in the X direction and the Y direction was 0.5%. When the membrane cooled to room temperature, it was removed from the chuck to obtain a biaxially stretched electrolyte membrane with a stretching ratio of 2.0 in the X direction and the Y direction.

The other electrolytic test method was the same as in Example 1.

The conditions for this example are as listed in Tables 1 to 3.

[Table 1]

| | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Com. Ex 1 | Com. Ex 2 | Com. Ex 3 | Com. Ex 4 | Com. Ex 5 |
|---|---|---|---|---|---|---|---|---|---|---|---|---|---|---|---|---|---|---|---|---|
| Cathode diffusion layer | Carbon foam | Carbon foam | Carbon foam | Carbon foam | Carbon foam | Carbon foam | Carbon foam | Carbon foam | Carbon foam | Carbon foam | Carbon foam | Carbon foam | Carbon fiber paper | Carbon fiber paper | Carbon fiber paper | Carbon fiber paper | Carbon fiber nonwoven fabric | Pt carbon foam | Carbon foam | Carbon fiber paper |
| Thickness of melamine foam (mm) | 25 | 4 | 30 | 25 | 3 | 2 | 40 | 25 | 25 | 25 | 2 | 2 | - | - | - | - | - | 375 | 25 | - |
| Compressive stress (Pa) | 280 | 70 | 630 | 280 | 70 | 18 | 18 | 280 | 280 | 280 | 0 | 0 | - | - | - | - | - | - | 70 | - |
| Carbonization temperature (°C) | 1100 | 1100 | 1100 | 2000 | 2000 | 1500 | 1500 | 1100 | 1100 | 1100 | 1100 | 2000 | - | - | - | - | - | - | 1100 | - |
| Thickness (μm) | 316 | 395 | 313 | 313 | 340 | 376 | 270 | 316 | 316 | 316 | 1000 | 1000 | 300 | 300 | 300 | 300 | 4500 | 300 | 315 | 300 |
| Basis weight (g·m⁻²) | 55 | 9 | 66 | 55 | 7 | 4 | 94 | 55 | 55 | 55 | 6 | 6 | 63 | 63 | 63 | 63 | 405 | 144 | 6 | 63 |
| Bulk density (g cm⁻³) | 0.17 | 0.02 | 0.21 | 0.17 | 0.02 | 0.01 | 0.35 | 0.17 | 0.17 | 0.17 | 0.006 | 0.006 | 0.21 | 0.21 | 0.21 | 0.21 | 0.09 | 0.48 | 0.02 | 0.21 |
| Real density (g cm⁻³) | 1.65 | 1.65 | 1.65 | 1.69 | 1.69 | 1.67 | 1.67 | 1.65 | 1.65 | 1.65 | 1.65 | 1.69 | 1.75 | 1.75 | 1.75 | 1.75 | 1.79 | 1.65 | 1.65 | 1.75 |
| Porosity (%) | 89.5 | 98.7 | 87.3 | 89.7 | 98.9 | 99.3 | 79.0 | 89.5 | 89.5 | 89.5 | 99.6 | 99.6 | 88.0 | 88.0 | 88.0 | 88.0 | 95.0 | 70.9 | 98.8 | 88.0 |
| Ratio $R$ ($N_f/N_n$) | 1.45 | 1.48 | 1.45 | 1.46 | 1.46 | 1.45 | 1.5 | 1.45 | 1.45 | 1.45 | 1.45 | 1.44 | - | - | - | - | - | - | 1.48 | - |
| Average value of orientation angle in x direction (deg) | 62.0 | 65.4 | 65.8 | 62.2 | 60.5 | 59.0 | 66.5 | 62.0 | 62.0 | 62.0 | 58.0 | 58.1 | - | - | - | - | - | - | 62.0 | - |
| Average value of orientation angle in y direction (deg) | 55.3 | 60.8 | 55.4 | 56.0 | 56.7 | 55.7 | 50.5 | 55.3 | 55.3 | 55.3 | 57.7 | 57.7 | - | - | - | - | - | - | 55.3 | - |
| Average value of orientation angle in z direction (deg) | 56.3 | 46.7 | 52.1 | 55.5 | 55.3 | 55.9 | 54.5 | 56.3 | 56.3 | 56.3 | 57.8 | 57.6 | - | - | - | - | - | - | 56.3 | - |
| $\theta_c$ (deg) | 6.7 | 18.7 | 13.7 | 6.7 | 5.2 | 3.3 | 16.0 | 6.7 | 6.7 | 6.7 | 0.3 | 0.5 | - | - | - | - | - | - | 6.7 | - |
| $\theta_d$ (deg) | 5.7 | 4.6 | 10.4 | 6.0 | 3.8 | 3.1 | 12.0 | 5.7 | 5.7 | 5.7 | 0.2 | 0.4 | - | - | - | - | - | - | 5.7 | - |
| Density of node portions (number of node portions $N_n$/mm³) | 557778 | 711539 | 676889 | 563012 | 62375 | 37560 | 1129500 | 557778 | 557778 | 557778 | 19363 | 19784 | - | - | - | - | - | - | 567890 | - |
| Average fiber diameter $d_{ave}$ (μm) of fibrous carbon | 2.1 | 2.1 | 2.1 | 2.1 | 2.1 | 2.1 | 2.1 | 2.1 | 2.1 | 2.1 | 2.1 | 2.1 | 9.8 | 9.8 | 9.8 | 9.8 | 10.1 | - | 0.4 | 9.8 |
| Carbon content (wt%) | 91.5 | 91.8 | 91.6 | 99.8 | 99.8 | 98.2 | 98.2 | 91.5 | 91.5 | 91.5 | 91.8 | 99.8 | 98.7 | 98.7 | 98.7 | 98.7 | 99.6 | 96.8 | 91.8 | 98.7 |
| Surface oxygen concentration (at%) | 7.3 | 7.2 | 7.4 | 1.2 | 1.1 | 2.8 | 2.9 | 7.3 | 7.3 | 7.3 | 7.1 | 1.2 | 1.9 | 1.9 | 1.9 | 1.9 | 1.3 | 3.2 | 7.2 | 1.9 |
| Crystallite size (nm) | 1.85 | 1.84 | 1.86 | 3.57 | 3.56 | 2.97 | 2.97 | 1.85 | 1.85 | 1.85 | 1.86 | 3.61 | 6.86 | 6.86 | 6.86 | 6.86 | 6.58 | 2.87 | 1.84 | 6.86 |
| Taber bending stiffness (gfcm) | 11.4 | 2.6 | 16.7 | 12.5 | 2.1 | 1.8 | 32.5 | 11.4 | 11.4 | 11.4 | 1.1 | 1.3 | 17.6 | 17.6 | 17.6 | 17.6 | - | 118.5 | 0.9 | 17.6 |
| Average carbon frequency (number/μm²) | 0.00201 | 0.00048 | 0.00229 | 0.00202 | 0.00051 | 0.00033 | 0.00347 | 0.00201 | 0.00201 | 0.00201 | 0.00026 | 0.00025 | 0.00080 | 0.00080 | 0.00080 | 0.00080 | 0.00036 | 0.00002 | 0.00031 | 0.00080 |
| Standard deviation of carbon frequency | 0.000060 | 0.000014 | 0.000077 | 0.000061 | 0.000015 | 0.000010 | 0.000104 | 0.000060 | 0.000060 | 0.000060 | 0.000023 | 0.000023 | 0.000506 | 0.000506 | 0.000506 | 0.000506 | 0.00054 | 0.000001 | 0.000009 | 0.000506 |
| Average carbon area ratio | 0.110 | 0.021 | 0.139 | 0.110 | 0.021 | 0.017 | 0.219 | 0.110 | 0.110 | 0.110 | 0.013 | 0.013 | 0.071 | 0.071 | 0.071 | 0.071 | 0.052 | 0.301 | 0.019 | 0.071 |
| Standard deviation of carbon area ratio | 0.009 | 0.002 | 0.011 | 0.009 | 0.002 | 0.001 | 0.017 | 0.009 | 0.009 | 0.009 | 0.002 | 0.002 | 0.035 | 0.035 | 0.035 | 0.035 | 0.010 | 0.024 | 0.002 | 0.035 |

[Table 2]

| | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Com. Ex. 1 | Com. Ex. 2 | Com. Ex. 3 | Com. Ex. 4 | Com. Ex. 5 |
|---|---|---|---|---|---|---|---|---|---|---|---|---|---|---|---|---|---|---|---|---|
| Polymer structure | P1 | P1 | P1 | P1 | P1 | P1 | P1 | P1 | P2 | P1 | P1 | P1 | P1 | P1 | P1 | P1 | P1 | P1 | P1 | P1 |
| EW (g/equivalent) | 750 | 750 | 750 | 750 | 750 | 750 | 750 | 950 | 1100 | 950 | 750 | 750 | 950 | 950 | 950 | 750 | 750 | 750 | 750 | 950 |
| Thickness of raw material membrane (μm) | 75 | 75 | 75 | 75 | 75 | 75 | 75 | 300 | 470 | 630 | 75 | 75 | 300 | 300 | 300 | 75 | 75 | 75 | 75 | 300 |
| Stretching ratio in X axial direction (times) | 1.0 | 1.0 | 1.0 | 1.0 | 1.0 | 1.0 | 1.0 | 2.0 | 2.5 | 2.9 | 1.0 | 1.0 | 2.0 | 2.0 | 2.0 | 1.0 | 1.0 | 1.0 | 1.0 | 2.0 |
| Stretching ratio in Y axial direction (times) | 1.0 | 1.0 | 1.0 | 1.0 | 1.0 | 1.0 | 1.0 | 2.0 | 2.5 | 2.9 | 1.0 | 1.0 | 2.0 | 2.0 | 2.0 | 1.0 | 1.0 | 1.0 | 1.0 | 2.0 |
| Stretching temperature (°C) | - | - | - | - | - | - | - | 140 | 100 | 140 | - | - | 140 | 140 | 140 | - | - | - | - | 140 |
| Stretching speed (mm min⁻¹) | - | - | - | - | - | - | - | 100 | 100 | 100 | - | - | 100 | 25 | 100 | - | - | - | - | 100 |
| Relaxation rate (%) (cooling process) | 0.0 | 0.0 | 0.0 | 0.0 | 0.0 | 0.0 | 0.0 | 0.5 | 0.5 | 1.0 | 0.0 | 0.0 | 0.5 | 0.5 | 0.5 | 0.0 | 0.0 | 0.0 | 0.0 | 0.5 |
| Heat set temperature (°C) | - | - | - | - | - | - | - | - | - | 140 | - | - | - | - | - | - | - | - | - | - |
| Heat set time (min) | - | - | - | - | - | - | - | - | - | 5 | - | - | - | - | - | - | - | - | - | - |
| Thickness after stretching (μm) | 75 | 75 | 75 | 75 | 75 | 75 | 75 | 75 | 75 | 75 | 75 | 75 | 75 | 75 | 75 | 75 | 75 | 75 | 75 | 75 |
| Craze area ratio (%) | 0.8 | 0.8 | 0.8 | 0.8 | 0.8 | 0.8 | 0.8 | 0.3 | 0.5 | 0.3 | 0.8 | 0.8 | 0.3 | 0.3 | 0.3 | 0.8 | 0.8 | 0.8 | 0.8 | 0.3 |
| Flatness | A | A | A | A | A | A | A | A | A | A | A | A | A | A | A | A | A | A | A | A |
| Ion cluster diameter in membrane plane direction (nm) | 3.28 | 3.28 | 3.28 | 3.28 | 3.28 | 3.28 | 3.28 | 3.08 | 2.97 | 3.05 | 3.28 | 3.28 | 3.08 | 3.08 | 3.08 | 3.28 | 3.28 | 3.28 | 3.28 | 3.08 |
| Ion cluster diameter out-of-membrane plane direction (nm) | 3.30 | 3.30 | 3.30 | 3.30 | 3.30 | 3.30 | 3.30 | 3.41 | 3.49 | 3.45 | 3.30 | 3.30 | 3.41 | 3.41 | 3.41 | 3.30 | 3.30 | 3.30 | 3.30 | 3.41 |
| Ratio of ion cluster diameter | 1.01 | 1.01 | 1.01 | 1.01 | 1.01 | 1.01 | 1.01 | 1.11 | 1.18 | 1.13 | 1.01 | 1.01 | 1.11 | 1.11 | 1.11 | 1.01 | 1.01 | 1.01 | 1.01 | 1.11 |
| In-membrane plane orientation parameter | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 | 0.01 |
| Out-of-membrane plane orientation parameter | 0.01 | 0.01 | 0.01 | 0.01 | 0.01 | 0.01 | 0.01 | 0.29 | 0.37 | 0.29 | 0.01 | 0.01 | 0.29 | 0.29 | 0.29 | 0.01 | 0.01 | 0.01 | 0.01 | 0.29 |
| Crystal long period (nm) | 11.5 | 11.5 | 11.5 | 11.5 | 11.5 | 11.5 | 11.5 | 24.5 | 32.5 | - | 11.5 | 11.5 | 24.5 | 24.5 | 24.5 | 11.5 | 11.5 | 11.5 | 11.5 | 24.5 |
| Crystal long period peak intensity | 1.32 | 1.32 | 1.32 | 1.32 | 1.32 | 1.32 | 1.32 | 0.37 | 0.09 | - | 1.32 | 1.32 | 0.37 | 0.37 | 0.37 | 1.32 | 1.32 | 1.32 | 1.32 | 0.37 |
| Dimensional change rate in X direction in 2M sulfate (%) | 105 | 105 | 105 | 105 | 105 | 105 | 105 | 98 | 99 | 99 | 105 | 105 | 98 | 98 | 98 | 105 | 105 | 105 | 105 | 98 |
| Dimensional change rate in Y direction in 2M sulfate (%) | 105 | 105 | 105 | 105 | 105 | 105 | 105 | 98 | 99 | 99 | 105 | 105 | 98 | 98 | 98 | 105 | 105 | 105 | 105 | 98 |
| Dimensional change rate in X direction in distilled water (%) | 111 | 111 | 111 | 111 | 111 | 111 | 111 | 96 | 96 | 96 | 111 | 111 | 96 | 96 | 96 | 111 | 111 | 111 | 111 | 96 |
| Dimensional change rate in Y direction in distilled water (%) | 111 | 111 | 111 | 111 | 111 | 111 | 111 | 96 | 96 | 96 | 111 | 111 | 96 | 96 | 96 | 111 | 111 | 111 | 111 | 96 |
| Dimensional change rate in Z direction in distilled water (%) | 111 | 111 | 111 | 111 | 111 | 111 | 111 | 127 | 127 | 127 | 111 | 111 | 127 | 127 | 127 | 111 | 111 | 111 | 111 | 127 |
| Puncture Strength (kgf μm⁻¹) | 0.018 | 0.018 | 0.018 | 0.018 | 0.018 | 0.018 | 0.018 | 0.042 | 0.051 | 0.046 | 0.018 | 0.018 | 0.042 | 0.042 | 0.042 | 0.018 | 0.018 | 0.018 | 0.018 | 0.042 |
| YI | 0.79 | 0.79 | 0.79 | 0.79 | 0.79 | 0.79 | 0.79 | 0.88 | 0.95 | 0.96 | 0.79 | 0.79 | 0.88 | 2.95 | 8.12 | 0.79 | 0.79 | 0.79 | 0.79 | 16.46 |

[Table 3]

| | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Com. Ex 1 | Com. Ex 2 | Com. Ex 3 | Com. Ex 4 | Com. Ex 5 |
|---|---|---|---|---|---|---|---|---|---|---|---|---|---|---|---|---|---|---|---|---|
| Current efficiency (%) at 500 mA cm$^{-2}$ | 99.3 | 98.9 | 99.5 | 99.4 | 98.9 | 98.8 | 99.1 | 99.6 | 99.7 | 99.8 | 98.7 | 98.9 | 97.5 | 97.5 | 97.5 | 88.9 | 87.6 | 82.3 | - | 97.4 |
| Voltage efficiency (%) at 500 mA cm$^{-2}$ | 62.8 | 60.5 | 63.2 | 62.8 | 61.1 | 60.8 | 63.2 | 62.8 | 62.8 | 62.8 | 60.8 | 60.5 | 59.8 | 59.4 | 58.3 | 59.8 | 59.5 | 60.5 | - | 56.9 |
| Energy efficiency (%) at 500 mA cm$^{-2}$ | 62.4 | 59.8 | 62.9 | 62.5 | 60.5 | 60.1 | 62.6 | 62.6 | 62.6 | 62.7 | 60.0 | 59.8 | 58.3 | 57.9 | 56.8 | 53.2 | 52.1 | 49.8 | - | 55.4 |

**EP 4 372 124 A1**

**Claims**

1. A cathode diffusion layer for organic hydride production comprising a carbon foam, the carbon foam being a porous body with continuous voids, and comprising linear portions and node portions joining the linear portions, wherein an average fiber diameter of the linear portions is 0.5 $\mu$m or more and 4.0 $\mu$m or less.

2. The cathode diffusion layer for organic hydride production according to claim 1, wherein the carbon foam has a Taber bending stiffness measured according to JIS P8125 of 1.0 or more and 50.0 gf·cm or less.

3. The cathode diffusion layer for organic hydride production according to claim 1 or 2, wherein the carbon foam has a density of the node portions of 20,000 /mm$^3$ or more in at least a portion thereof, and has a crystallite size of 1.50 nm or more based on diffraction of the (002) plane in a powder X-ray diffraction measurement.

4. The cathode diffusion layer for organic hydride production according to claim 1, wherein the carbon form has an average carbon frequency of 0.0004 to 0.0035 $\mu$m$^{-2}$.

5. The cathode diffusion layer for organic hydride production according to claim 4, wherein the carbon form has a standard deviation of the carbon frequency of 0.0005 or less.

6. The cathode diffusion layer for organic hydride production according to claim 4 or 5, wherein the carbon form has an average carbon area ratio of 0.010 to 0.300.

7. The cathode diffusion layer for organic hydride production according to claim 6, wherein the carbon form has a standard deviation of the carbon area ratio of 0.030 or less.

8. An electrolytic cell for organic hydride production comprising:

   a proton-conductive solid polymer electrolyte membrane;
   an anode catalyst layer to oxidize water to generate protons, the anode catalyst layer being provided on one side of the solid polymer electrolyte membrane;
   a cathode catalyst layer to reduce a substance to be hydrogenated; and
   a cathode diffusion layer according to any one of claims 1, 2, 4, or 5, the cathode catalyst layer and the cathode diffusion layer being provided on the other side of the solid polymer electrolyte membrane.

9. An electrolytic cell for organic hydride production comprising:

   a proton-conductive solid polymer electrolyte membrane;
   an anode catalyst layer to oxidize water to generate protons, the anode catalyst layer being provided on one side of the solid polymer electrolyte membrane;
   a cathode catalyst layer to reduce a substance to be hydrogenated; and
   a cathode diffusion layer according to claim 6, the cathode catalyst layer and the cathode diffusion layer being provided on the other side of the solid polymer electrolyte membrane.

10. The electrolytic cell for organic hydride production according to claim 8, wherein the solid polymer electrolyte membrane is a perfluorocarbon polymer with ion exchange groups, an equivalent weight (EW) of the ion exchange groups is 600 g/eq or more and 2000 g/eq or less, a dimensional change ratio in at least one of an X direction and a Y direction is 80% or more and less than 100% and a dimensional change ratio in a Z direction is 115% or more of the following dimensional change ratios caused by immersion in distilled water, and an ion cluster diameter in a direction perpendicular to a membrane plane measured by small-angle X-ray scattering is 3.0 nm or more:
    <dimensional change ratio caused by immersion in distilled water>
    a test electrolyte membrane with a water content of 1% or less is prepared, the test electrolyte membrane is immersed in distilled water at 25 °C for 30 minutes, and the dimensional change ratios in the X direction and the Y direction perpendicular to the X direction on a plane of the test electrolyte membrane, and the Z direction perpendicular to the X direction and the Y direction is calculated:

    the dimensional change ration (%) = (dimension in a specified direction after immersion) / (dimension in the specified direction before the immersion) $\times$ 100.

11. The electrolytic cell for organic hydride production according to claim 9, wherein the solid polymer electrolyte membrane is a perfluorocarbon polymer with ion exchange groups, an equivalent weight (EW) of the ion exchange groups is 600 g/eq or more and 2000 g/eq or less, a dimensional change ratio in at least one of an X direction and a Y direction is 80% or more and less than 100% and a dimensional change ratio in a Z direction is 115% or more of the following dimensional change ratios caused by immersion in distilled water, and an ion cluster diameter in a direction perpendicular to a membrane plane measured by small-angle X-ray scattering is 3.0 nm or more:
<dimensional change ratio caused by immersion in distilled water>
a test electrolyte membrane with a water content of 1% or less is prepared, the test electrolyte membrane is immersed in distilled water at 25 °C for 30 minutes, and the dimensional change ratios in the X direction and the Y direction perpendicular to the X direction on a plane of the test electrolyte membrane, and the Z direction perpendicular to the X direction and the Y direction is calculated:

the dimensional change ratio (%) = (dimension in a specified direction after immersion) / (dimension in the specified direction before the immersion) $\times$ 100.

12. The electrolytic cell for organic hydride production according to claim 10 or 11, wherein the solid polymer electrolyte membrane has a peak intensity of a crystal long period measured by small-angle X-ray scattering of 0.5 or less.

13. The electrolytic cell for organic hydride production according to claim 10 or 11, wherein the solid polymer electrolyte membrane has a craze area ratio of 1.5% or less.

14. The electrolytic cell for organic hydride production according to claim 12, wherein the solid polymer electrolyte membrane has a craze area ratio of 1.5% or less.

15. An electrolytic cell for organic hydride production comprising:

   a proton-conductive solid polymer electrolyte membrane;
   an anode catalyst layer to oxidize water to generate protons, the anode catalyst layer being provided on one side of the solid polymer electrolyte membrane; and
   a cathode catalyst layer to reduce a substance to be hydrogenated, the cathode catalyst layer being provided on the other side of the solid polymer electrolyte membrane,
   wherein the solid polymer electrolyte membrane is a perfluorocarbon polymer with ion exchange groups, an equivalent weight (EW) of the ion exchange groups is 600 g/eq or more and 2000 g/eq or less, and a dimensional change ratio in at least one of an X direction and a Y direction of the following dimensional change ratios caused by immersion in a 2M sulfuric acid aqueous solution is 80% or more and less than 100%:
   <dimensional change ratio caused by immersion in the 2M sulfuric acid aqueous solution>
   a test electrolyte membrane with a water content of 1% or less is prepared, the test electrolyte membrane is immersed in a 2M sulfuric acid aqueous solution for 30 minutes at 25 °C, and the dimensional change ratio in the X-direction and the Y-direction perpendicular to the X-direction on a plane of the test electrolyte membrane is calculated using the following formula:

   the dimensional change ratio (%) = (dimension in a specified direction after immersion) / (dimension in the specified direction before the immersion) $\times$ 100.

16. An electrolytic cell for organic hydride production comprising:

   a proton-conductive solid polymer electrolyte membrane;
   an anode catalyst layer to oxidize water to generate protons, the anode catalyst layer being provided on one side of the solid polymer electrolyte membrane; and
   a cathode catalyst layer to reduce a substance to be hydrogenated, the cathode catalyst layer being provided on the other side of the solid polymer electrolyte membrane,
   wherein the solid polymer electrolyte membrane is a perfluorocarbon polymer with ion exchange groups, an equivalent weight (EW) of the ion exchange groups is 600 g/eq or more and 2000 g/eq or less, and a dimensional change ratio in at least one of an X direction and a Y direction is 80% or more and less than 100% and a dimensional change ratio in a Z direction is 115% or more of the following dimensional change ratios caused by immersion in distilled water:

<dimensional change ratio caused by immersion in distilled water >

a test electrolyte membrane with a water content of 1% or less is prepared, the test electrolyte membrane is immersed in distilled water at 25 °C for 30 minutes, and the dimensional change ratios in the X direction and the Y direction perpendicular to the X direction on a plane of the test electrolyte membrane, and the Z direction perpendicular to the X direction and the Y direction is calculated:

the dimensional change ratio (%) = (dimension in a specified direction after immersion) / (dimension in the specified direction before the immersion) × 100.

17. The electrolytic cell for organic hydride production according to claim 15 or 16, wherein the solid polymer electrolyte membrane has a craze area ratio of 1.5% or less.

18. The electrolytic cell for organic hydride production according to claim 17, wherein the solid polymer electrolyte membrane has a YI value of 9.00 or less.

19. The electrolytic cell for organic hydride production according to claim 17, wherein the solid polymer electrolyte membrane has a peak intensity of a crystal long period measured by small-angle X-ray scattering of 0.5 or less.

20. The electrolytic cell for organic hydride production according to claim 18, wherein the solid polymer electrolyte membrane has a peak intensity of a crystal long period measured by small-angle X-ray scattering of 0.5 or less.

21. The electrolytic cell for organic hydride production according to claim 19, wherein the solid polymer electrolyte membrane has an ion cluster diameter in a direction perpendicular to a membrane plane measured by small-angle X-ray scattering of 3.0 nm or more.

# FIG. 1

# FIG. 2

```
        ┌─────────────┐
        │    Start     │
        └──────┬──────┘
               │
               ▼
┌──────────────────────────────────────────┐
│   Raw material foam introduction process   │──S1
└──────────────────┬───────────────────────┘
                   │
                   ▼
┌──────────────────────────────────────────┐
│              Heating process               │──S2
└──────────────────┬───────────────────────┘
                   │
                   ▼
┌──────────────────────────────────────────┐
│            Carbonization process           │──S3
└──────────────────┬───────────────────────┘
                   │
                   ▼
┌──────────────────────────────────────────┐
│              Cooling process               │──S4
└──────────────────┬───────────────────────┘
                   │
                   ▼
┌──────────────────────────────────────────┐
│         Carbon foam removing process       │──S5
└──────────────────┬───────────────────────┘
                   │
                   ▼
        ┌─────────────┐
        │     End      │
        └─────────────┘
```

# FIG. 3

1.0kV 8.6mm x500 SE(U)    100um

*FIG. 4*

1.0kV 9.7mm x100 LM(L)　　　　　500μm

# FIG. 5

# FIG. 6

FIG. 7

## INTERNATIONAL SEARCH REPORT

| International application No. |
| --- |
| **PCT/JP2022/025196** |

| A. | CLASSIFICATION OF SUBJECT MATTER |
| --- | --- |

*C25B 3/25*(2021.01)i; *B01J 23/46*(2006.01)i; *B01J 31/06*(2006.01)i; *C01B 32/05*(2017.01)i; *C04B 35/52*(2006.01)i; *C04B 38/00*(2006.01)i; *C25B 3/03*(2021.01)i; *C25B 9/00*(2021.01)i; *C25B 9/23*(2021.01)i; *C25B 11/032*(2021.01)i; *H01M 8/0606*(2016.01)i
FI: C25B3/25; C25B11/032; C25B3/03; C25B9/23; C25B9/00 G; B01J23/46 M; B01J31/06 Z; C01B32/05; C04B38/00 303A; C04B35/52; H01M8/0606

According to International Patent Classification (IPC) or to both national classification and IPC

| B. | FIELDS SEARCHED |
| --- | --- |

Minimum documentation searched (classification system followed by classification symbols)

C25B3/25; B01J23/46; B01J31/06; C01B32/05; C04B35/52; C04B38/00; C25B3/03; C25B9/00; C25B9/23; C25B11/032; H01M8/0606

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2017-179601 A (JX NIPPON OIL & ENERGY CORP) 05 October 2017 (2017-10-05) claims, paragraph [0034] | 1-21 |
| Y | WO 2020/045645 A1 (ASAHI KASEI KABUSHIKI KAISHA) 05 March 2020 (2020-03-05) claims, paragraphs [0023], [0027], [0041] | 1-21 |
| Y | WO 2018/096895 A1 (ASAHI KASEI KABUSHIKI KAISHA) 31 May 2018 (2018-05-31) claims, paragraphs [0030], [0045], [0050], [0052] | 1-21 |
| Y | WO 2019/069570 A1 (ASAHI KASEI KABUSHIKI KAISHA) 11 April 2019 (2019-04-11) claims, paragraph [0097] | 1-21 |
| Y | WO 2020/184455 A1 (ASAHI KASEI KABUSHIKI KAISHA) 17 September 2020 (2020-09-17) claims | 1-21 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 August 2022** | **06 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| | International application No. |
| --- | --- |
| | **PCT/JP2022/025196** |

**C.   DOCUMENTS CONSIDERED TO BE RELEVANT**

| Category* | Citation of document, with indication, where appropriate, of the relevant passages | Relevant to claim No. |
| --- | --- | --- |
| A | JP 2017-190486 A (ASAHI KASEI KABUSHIKI KAISHA) 19 October 2017 (2017-10-19) | 1-21 |

Form PCT/ISA/210 (second sheet) (January 2015)

**INTERNATIONAL SEARCH REPORT**
Information on patent family members

International application No.

**PCT/JP2022/025196**

| Patent document cited in search report | | | Publication date (day/month/year) | Patent family member(s) | | | Publication date (day/month/year) |
|---|---|---|---|---|---|---|---|
| JP | 2017-179601 | A | 05 October 2017 | (Family: none) | | | |
| WO | 2020/045645 | A1 | 05 March 2020 | US | 2021/0292242 | A1 | |
| | | | | claims, paragraphs [0075]-[0076], [0081]-[0082], [0100]-[0101] | | | |
| | | | | CN | 112585104 | A | |
| | | | | KR 10-2020-0134276 | | A | |
| | | | | TW | 202017888 | A | |
| WO | 2018/096895 | A1 | 31 May 2018 | US | 2020/0161670 | A1 | |
| | | | | claims, paragraphs [0081]-[0083], [0113]-[0114], [0124]-[0125], [0128]-[0129] | | | |
| | | | | CN | 109863129 | A | |
| | | | | KR 10-2021-0043753 | | A | |
| | | | | TW | 201820682 | A | |
| WO | 2019/069570 | A1 | 11 April 2019 | US | 2020/0243866 | A1 | |
| | | | | claims, table 1 | | | |
| | | | | CN | 111051266 | A | |
| | | | | TW | 201922613 | A | |
| WO | 2020/184455 | A1 | 17 September 2020 | US | 2022/0045345 | A1 | |
| | | | | claims | | | |
| | | | | CN | 113544886 | A | |
| | | | | KR 10-2021-0093345 | | A | |
| | | | | TW | 202042433 | A | |
| JP | 2017-190486 | A | 19 October 2017 | (Family: none) | | | |

Form PCT/ISA/210 (patent family annex) (January 2015)

53

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003045449 A
- JP 2005126288 A
- JP 2013111585 A
- WO 2015029367 A1
- WO 2015146944 A1
- WO 2020184455 A1
- JP H04349178 A

**Non-patent literature cited in the description**

- **NOBUYUKI OTSU.** Automatic Threshold Selection Method based on Discrimination and Least Squares Criterion. *The IEICE Transactions D,* 1980, vol. J63-D (4), 346-356
- **YASUHIRO HASHIMOTO ; NAOKI SAKAMOTO ; HIDEKI IIJIMA.** *KOBUNSHU RONBUNSHU,* 2006, vol. 63 (3), 166